# EUROPÄISCHE PATENTSCHRIFT

(11) **EP 3 713 833 B1**
(45) Veröffentlichungstag und Bekanntmachung des Hinweises auf die Patenterteilung: **01.09.2021**
(21) Anmeldenummer: 18803918.4
(22) Anmeldetag: 12.11.2018
(51) Int. Cl.: B63B 23/30, B63B 23/40, B63B 27/36

(54) **VORRICHTUNG UND VERFAHREN ZUM AUFNEHMEN EINES WASSERFAHRZEUGS MITTELS EINER KETTE**
DEVICE AND METHOD FOR LIFTING A WATERCRAFT USING A CHAIN
DISPOSITIF ET PROCÉDÉ POUR ACCUEILLIR UN VÉHICULE NAUTIQUE AU MOYEN D'UNE CHAÎNE

(30) Priorität: 23.11.2017 DE 102017220932
(43) Veröffentlichungstag der Anmeldung: 30.09.2020
(73) Patentinhaber: thyssenkrupp Marine Systems GmbH, 24143 Kiel (DE); thyssenkrupp AG, 45143 Essen (DE)
(72) Erfinder: OESMANN, Hans, 21149 Hamburg (DE); HALFMANN, Sebastian, 22851 Norderstedt (DE); BUES, Ronja, 20257 Hamburg (DE)
(74) Vertreter: thyssenkrupp Intellectual Property GmbH
(86) Internationale Anmeldenummer: PCT/EP2018/080871
(87) Internationale Veröffentlichungsnummer: WO 2019/101553

(56) Entgegenhaltungen:
- JP-A- S6 226 189
- US-A1- 2008 202 405

## Beschreibung

Die Erfindung betrifft eine Aufnahmevorrichtung und ein Aufnahmeverfahren zum Aufnehmen mindestens eines Wasserfahrzeugs mittels einer Kette, insbesondere zum Aufnehmen eines Boots an Bord eines Mutterschiffs.

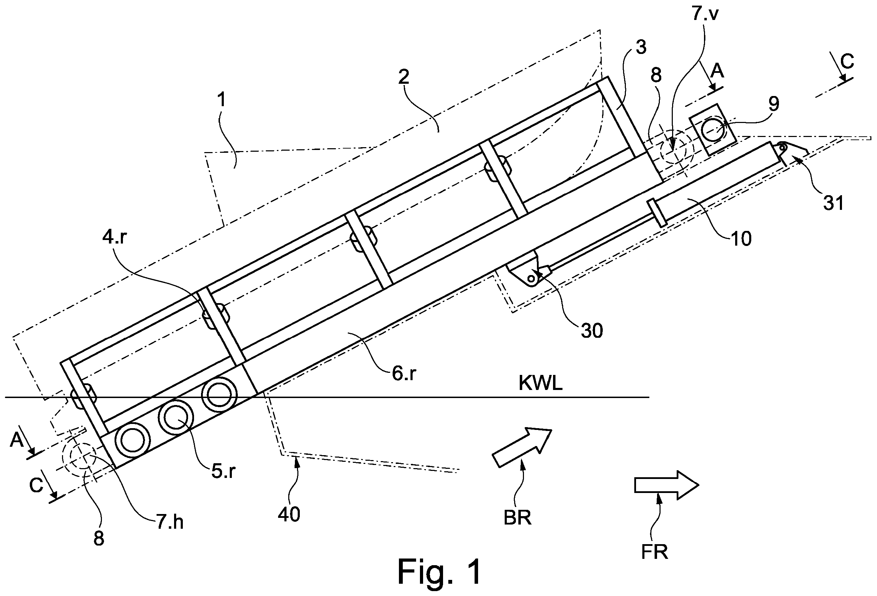

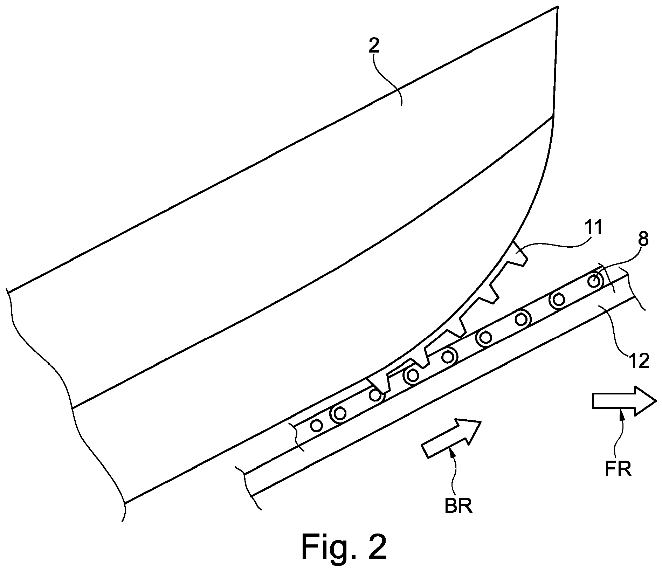

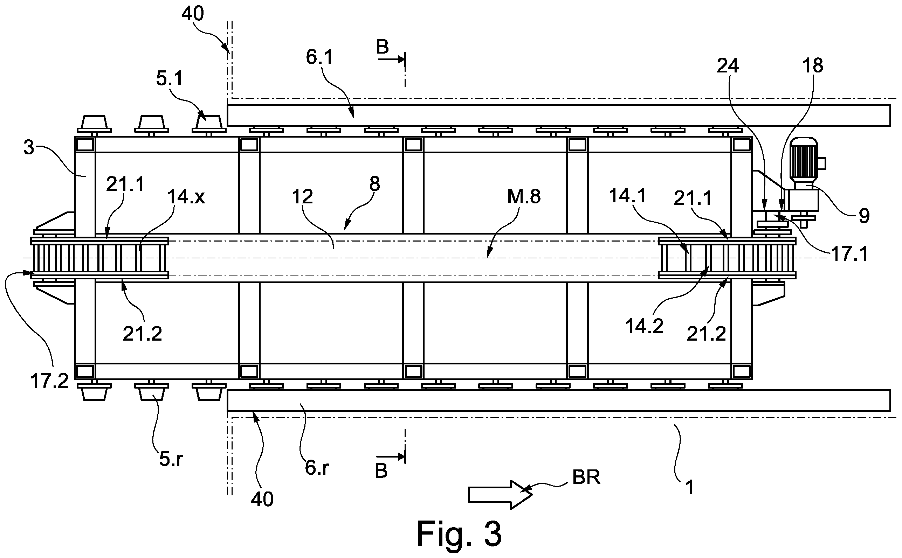

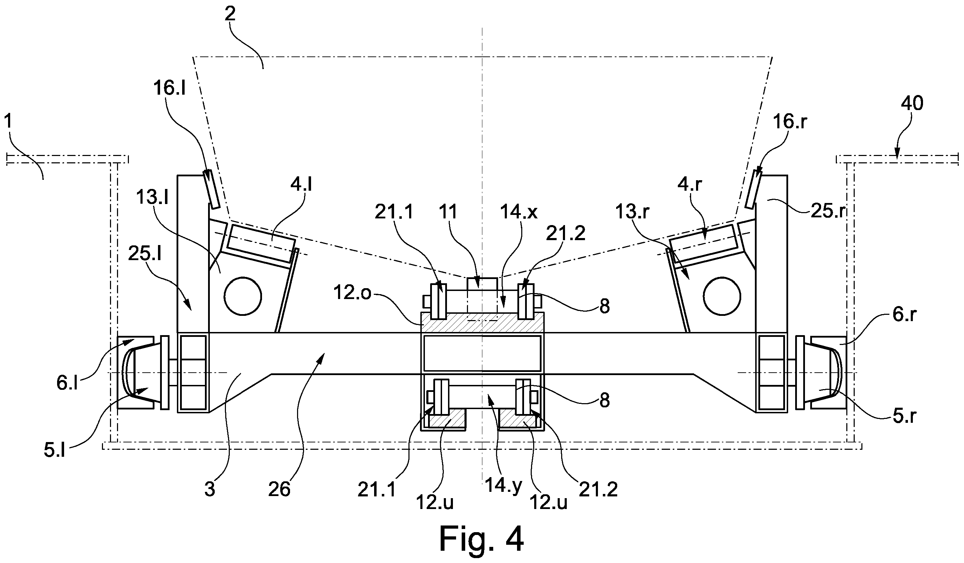

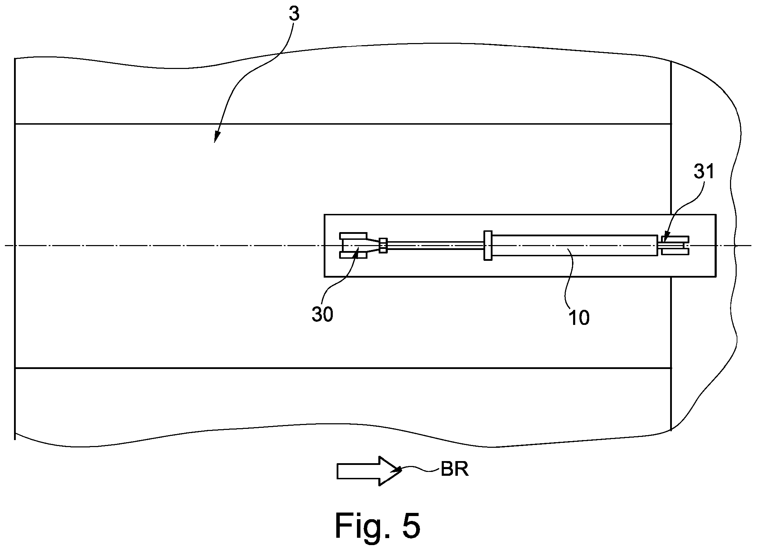

In JP S62-26189 A wird eine Aufnahmevorrichtung eines Schiffs 1 beschrieben, welche nacheinander mehrere Beiboote 2 aufnehmen kann und wieder ins Wasser absetzen kann, vgl. Figur 1. Jedes Beiboot 2 hat einen mittig angebrachten Sporn oder Haken 10 am Kiel nahe dem Bug, vgl. Figur 4 und Figur 5, und fährt von der Seite im rechten Winkel auf das Schiff 1 zu. Der Sporn oder Haken 10 hakt sich in eine angetriebene Kette 8 mit Mitnehmern ein, vgl. Figur 3 und Figur 5. Die angetriebene Kette 8 zieht das Beiboot 2 aus dem Wasser (in Figur 1 von links nach rechts) und dann durch einen Tunnel 3. Dieser Tunnel 3 führt quer durch das Schiff 1 und besitzt einen schräg ansteigenden Einlass 4, einen schräg abfallenden Auslass 5 und ein Plateau 7 zwischen dem Einlass 4 und dem Auslass 5, vgl. Figur 1. Ein Beiboot 2 wird von mehreren Führungsrollen 9 geführt, während es durch den Tunnel 3 gezogen wird, vgl. Figur 2 und Figur 3.

In JP 2007-038706 A wird ein Mutterschiff 1 beschrieben, welches ein Boot 3 mit Hilfe einer Rampe 2a aufnehmen kann, vgl. Figur 1. Das Boot 3 fährt auf eine schräg ansteigende Fördereinrichtung 5. Die Fördereinrichtung 5 weist ein Förderband 5a mit Vorsprüngen 5b auf und zieht das Boot 3 mittels des Förderbands 5a aus dem Wasser und auf die Rampe 2A. Hierbei befindet das Förderband 5a sich mittig unterhalb des Boots 3. Vorsprünge 5b des Förderband fassen jeweils einen Haken 3a an der Unterseite des Boots 3.

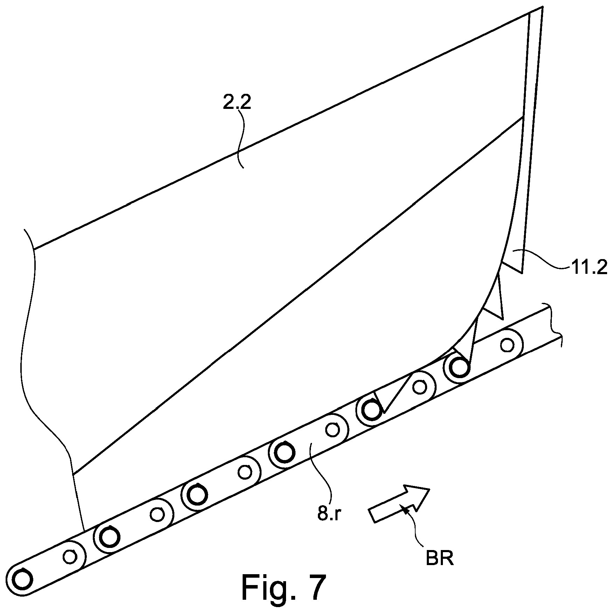

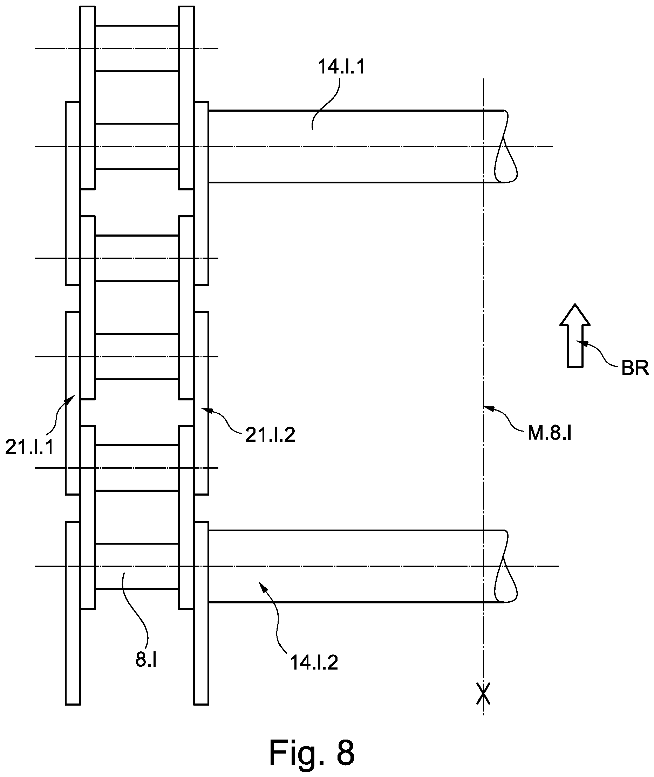

Figur 1 von DE 10 2011 109 092 A1 zeigt ein System 1, welches an Bord eines Schiffs 8 montiert ist und ein Unterwasserfahrzeug 2 zu bergen vermag. Mittels eines Seils 50 wird das Unterwasserfahrzeug 2 auf eine Bergerampe 12 des Systems 1 gezogen. An diese Bergerampe 12 ist eine Wellenausgleichsrampe 24 dergestalt montiert, dass die Wellenausgleichsrampe 24 sich relativ zur Bergerampe 12 um eine horizontale Schwenkachse S auf- und abbewegen kann. Das vordere Ende 26 der Wellenausgleichsrampe 24 ist über ein Gelenk 28 mit der Bergerampe 12 verbunden. Nahe ihrem freien Ende 34 sind zwei Schwimmkörper 36, 38 montiert, vgl. Figur 1 und Figur 4. Der hintere Schwimmkörper 38 ist an einer Aufnahmeeinrichtung 40 für das Unterwasserfahrzeug 2 montiert, vgl. Figur 4. Das Unterwasserfahrzeug 2 fährt zwischen zwei gespreizten Führungsleisten 130, 132 auf die Bergerampe 12 zu, vgl. Figur 7, und wird zwischen den Führungsleisten 130 und 132 festgehalten, vgl. Figur 8. Das System 1 lässt sich zusammenfalten, vgl. Figur 3.

In DE 39 38 188 A1 werden eine Vorrichtung und ein Verfahren beschrieben, um ein Boot 10 in einen Stauraum 12 eines Schiffs 11 aufzuholen. Eine entsprechende Aufnahmevorrichtung 13 stützt das Boot 10 mit Hilfe von mehreren Rollen 14 ab. Zwei parallele Rollenketten 16 werden von einem Antrieb 15 angetrieben und bewegen das Boot 10 beim Aufholen voran, vgl. Fig. 1. Die Rollenketten 16 sind im Bereich des Bodens 17 parallel zur Längsachse des Stauraums 12 ausgerichtet und werden in Kunststoffbahnen oberhalb und unterhalb von Zahnrädern 161 und 162 geführt. Zwei Teile 181 und 182 eines Verbindungsmittels stellen eine lösbare Kupplung zwischen den Rollenketten 16 und dem Boot 10 bereit. Das Verbindungsmittel-Teil 181 ist eine Einklinklasche am Boot 10, das andere Verbindungsmittel-Teil 182 ist über einen Wagen 19 mit den Rollenketten 16 verbunden.

Aufgabe der Erfindung ist es, eine Aufnahmevorrichtung mit den Merkmalen des Oberbegriffs des Anspruchs 1 und ein Aufnahmeverfahren mit den Merkmalen des Oberbegriffs des Anspruchs 12 bereitzustellen, welche die Gefahr reduzieren, dass eine große Menge Wasser in die Aufnahmevorrichtung eindringen kann.

Gelöst wird diese Aufgabe durch eine Aufnahmevorrichtung mit den in Anspruch 1 angegebenen Merkmalen und ein Aufnahmeverfahren mit den in Anspruch 12 angegebenen Merkmalen. Vorteilhafte Weiterbildungen ergeben sich aus den Unteransprüchen, der nachfolgenden Beschreibung sowie den Zeichnungen.

Die lösungsgemäße Aufnahmevorrichtung vermag mindestens ein Wasserfahrzeug aus dem Wasser zu ziehen und aufzunehmen. Die lösungsgemäße Aufnahmevorrichtung umfasst
- eine Tragstruktur,
- einen Rahmen,
- ein Rahmen-Stellglied,
- mindestens eine endlose Kette und
- einen Ketten-Antrieb.
Das lösungsgemäße Aufnahmeverfahren wird mit Hilfe einer solchen Aufnahmevorrichtung durchgeführt.

Der Rahmen wird von der Tragstruktur gehalten und lässt sich relativ zur Tragstruktur zwischen einer Aufnahmeposition und mindestens einer Parkposition hin und her bewegen. Der Rahmen vermag ein aufzunehmendes Wasserfahrzeug zu tragen. Das Rahmen-Stellglied vermag den Rahmen mitsamt einem vom Rahmen getragenen Wasserfahrzeug relativ zur Tragstruktur von der Aufnahmeposition in die oder eine Parkposition zu bewegen und dadurch das getragene Wasserfahrzeug aus dem Wasser zu ziehen.

Die oder jede Kette der Aufnahmevorrichtung umfasst jeweils eine Abfolge von Mitnehmern und ist mechanisch mit dem Rahmen verbunden. Die oder jede Kette lässt sich relativ zum Rahmen entlang jeweils einer geschlossenen Kurve bewegen. Der Ketten-Antrieb vermag die oder jede Kette relativ zum Rahmen und dadurch entlang der geschlossenen Kurve zu bewegen. Ein auf dem Wasser schwimmendes Wasserfahrzeug lässt sich temporär mit der oder mindestens einer Kette der Aufnahmevorrichtung verbinden. Mindestens ein Mitnehmer der vom Ketten-Antrieb bewegten Kette zieht das temporär verbundene Wasserfahrzeug aus dem Wasser und auf den Rahmen.

Wenn der Rahmen in der Aufnahmeposition ist, befindet sich wenigstens ein Teil der oder jeder Kette der Aufnahmevorrichtung unter der Wasseroberfläche. Ein aufzunehmendes Wasserfahrzeug wird durch die Bewegung des Rahmens aus der Aufnahmeposition in die oder eine Parkposition und durch die Bewegung der Kette relativ zum Rahmen aus dem Wasser gezogen.

Dank der oder mindestens einer angetriebenen Kette mit Mitnehmern vermag die Aufnahmevorrichtung nicht nur ein angetriebenes, sondern auch ein nicht angetriebenes Wasserfahrzeug aus dem Wasser zu ziehen, nachdem das Wasserfahrzeug temporär mit der oder mindestens einer Kette verbunden ist. Im Falle eines angetriebenen Wasserfahrzeugs braucht der Antrieb des Wasserfahrzeugs überhaupt nicht oder nur unterstützend dazu beizutragen, das Wasserfahrzeug auf den Rahmen zu ziehen. Die Bewegung des Wasserfahrzeugs aus dem Wasser hängt insbesondere nicht davon ab, ob ein Propeller oder ein Wasserstrahlantrieb oder ein sonstiger Bestandteil des Antriebs des Wasserfahrzeugs sich unterhalb oder oberhalb der Wasseroberfläche befindet und daher zum Vortrieb des Wasserfahrzeugs beitragen kann oder nicht. Insbesondere die oder mindestens eine angetriebene Kette mit Mitnehmern vermeidet die Notwendigkeit, das Wasserfahrzeug in zwei Schritten aufzunehmen, nämlich in einem ersten Schritt, bei dem der Antrieb des Wasserfahrzeugs zum Aufnehmen beiträgt oder das schwimmende Wasserfahrzeug geschoben oder gezogen wird, und einem zweiten Schritt, bei dem der Antrieb des Wasserfahrzeugs nicht mehr ins Wasser reicht und daher nicht mehr das Wasserfahrzeug bewegen kann oder das Wasserfahrzeug nicht mehr geschoben oder gezogen wird. Möglich, aber dank der Erfindung nicht erforderlich ist es, das Wasserfahrzeug mit Hilfe eines Hakens oder einer Öse mit einem Seil zu verbinden und das Wasserfahrzeug an diesem Seil auf die Tragstruktur zu ziehen. Weiterhin verhindert die Kette der lösungsgemäßen Aufnahmevorrichtung, dass ein temporär mit der Kette verbundenes Wasserfahrzeug von dem Rahmen zurück ins Wasser rutscht.

Um die Erfindung anzuwenden, braucht ein aufzunehmendes Wasserfahrzeug nur relativ geringfügig an die lösungsgemäße Aufnahmevorrichtung angepasst zu werden. Ausreichend ist, mindestens einen Vorsprung, z.B. einen Haken oder einen Sporn oder eine Zahnschiene, an den Rumpf des aufzunehmenden Wasserfahrzeugs in eine Position nahe dem Bug oder nahe dem Heck zu montieren. Der oder mindestens ein Mitnehmer der Aufnahmevorrichtung greift hinter den oder einen Vorsprung am Rumpf des Wasserfahrzeugs. Oder der oder mindestens ein Vorsprung am Wasserfahrzeug greift zwischen zwei Mitnehmer ein. In beiden Ausgestaltungen wird das Wasserfahrzeug temporär und lösbar mit der oder mindestens einer Kette verbunden. Die angetriebene Kette zieht an mindestens einem Mitnehmer das temporär verbundene Wasserfahrzeug mit dem Vorsprung aus dem Wasser.

Damit ein aufzunehmendes schwimmendes Wasserfahrzeug auf den von der Tragstruktur gehaltenen Rahmen gelangen kann, ist es erforderlich, dass wenigstens ein Teil des Rahmens und/oder ein Teil der oder einer Kette sich unterhalb der Wasseroberfläche befinden. Der Rahmen lässt sich zwischen der Aufnahmeposition und der oder einer Parkposition hin und her bewegen. Der Rahmen ist somit als ein Schlitten ausgestaltet. Der Rahmen trägt die oder jede Kette und damit ein aufzunehmendes Wasserfahrzeug, welches mit einem Mitnehmer der oder einer Kette temporär verbunden ist. Weil der Rahmen relativ zur Tragstruktur beweglich ist, ist es nicht erforderlich, dass der Rahmen oder die Tragstruktur sich dauerhaft in einer Position befinden, in der ein auf dem Wasser schwimmendes Wasserfahrzeug in eine Position oberhalb des Rahmens gelangen kann. Die bewegliche Ausgestaltung des Rahmens ermöglicht es, dass der Rahmen und/oder die Kette zum Aufnehmen des Wasserfahrzeugs in eine Aufnahmeposition teils unterhalb der Wasseroberfläche verbracht wird und dann der Rahmen mitsamt der Kette und dem Wasserfahrzeug in die oder eine Parkposition gezogen wird, in welcher der Rahmen, die oder jede Kette und das Wasserfahrzeug sich vollständig oberhalb der Wasseroberfläche befinden. Der Rahmen befindet sich also nur dann teilweise unterhalb der Wasseroberfläche, wenn ein Wasserfahrzeug aufzunehmen ist. Die Ausgestaltung, dass der Rahmen vollständig aus dem Wasser gezogen werden kann und sich in der oder einer Parkposition vollständig oberhalb der Wasseroberfläche befindet, reduziert die Gefahr, dass viel Wasser in die Aufnahmevorrichtung eindringt. Diese Gefahr sollte insbesondere dann reduziert werden, wenn die Aufnahmevorrichtung zu einem weiteren Wasserfahrzeug gehört, welches das Wasserfahrzeug aufnimmt, während das weitere Wasserfahrzeug auf dem Wasser schwimmt. Eine große Menge von eingedrungenem Wasser kann die Stabilität des weiteren Wasserfahrzeugs gefährden.

Ein aufzunehmendes Wasserfahrzeug lässt sich dank der Erfindung durch eine Überlagerung von zwei gleichgerichteten Bewegungen aus dem Wasser ziehen:
- eine Bewegung des Rahmens mitsamt der oder jeder Kette und dem Wasserfahrzeug relativ zur Tragstruktur und
- eine Bewegung der oder einer Kette relativ zum Rahmen, wodurch das Wasserfahrzeug relativ zum Rahmen aus dem Wasser bewegt wird.

Möglich ist, die beiden Bewegungen zeitlich überlappend durchzuführen. Diese Überlagerung von zwei Bewegungen spart Zeit ein im Vergleich zu einer seriellen Durchführung oder einer Ausgestaltung mit einer einzigen Relativbewegung. Das Wasserfahrzeug wird dank der zeitlich überlappenden Durchführung schneller aus dem Wasser gezogen. Dank der Kette kann der Rahmen kürzer ausgestaltet sein - verglichen mit einer denkbaren Ausgestaltung des Rahmens ohne Kette. Die Ausdehnung des Rahmens in die Bewegungsrichtung, in die ein Wasserfahrzeug aus dem Wasser gezogen wird, braucht nur so groß zu sein, dass der Rahmen ein aufzunehmendes Wasserfahrzeug sicher halten kann. Die Ausdehnung des Rahmens kann geringer sein als die Länge des Wasserfahrzeugs. Dank der Kette kann die Strecke, über welche der Rahmen bei der Bewegung von der Aufnahmeposition in die Parkposition bewegt wird, kürzer sein verglichen mit einer denkbaren Ausgestaltung des Rahmens ohne Kette.

Dank der lösungsgemäßen Aufnahmevorrichtung und des lösungsgemäße Aufnahmeverfahrens lässt sich ein Wasserfahrzeug mit geringem Personaleinsatz oder sogar vollautomatisch aus dem Wasser in die oder eine Parkposition zu ziehen. Es reicht aus, dass ein aufzunehmendes Wasserfahrzeug in einer mittigen Orientierung auf den Rahmen zu fährt und der Rahmen sich in der Aufnahmeposition befindet. Alle weiteren Schritte beim Aufnehmen des Wasserfahrzeugs können automatisch ablaufen. Daher lässt die Erfindung sich auch zum Aufnehmen eines unbemannten Wasserfahrzeugs anwenden. Falls die Aufnahmevorrichtung an Bord eines weiteren Wasserfahrzeugs montiert ist, so ist es dank der Erfindung nicht erforderlich, dass ein Besatzungsmitglied des weiteren Wasserfahrzeugs zur Aufnahmevorrichtung geht, um das Wasserfahrzeug aus dem Wasser zu ziehen.

Vorzugsweise ist der Rahmen der Aufnahmevorrichtung relativ zur Tragstruktur - gesehen in die Richtung, in welche das Rahmen-Stellglied den Rahmen in die Parkposition bewegt und die Aufnahmevorrichtung ein Wasserfahrzeug aus dem Wasser zieht - schräg ansteigend angeordnet. Bei dieser Positionierung des Rahmens ist weniger Kraft erforderlich, um den Rahmen mitsamt einem aufnehmenden Wasserfahrzeug aus der Aufnahmeposition in die oder eine Parkposition zu ziehen - verglichen mit einer vertikalen Bewegung oder einer Bewegung entlang einer gekrümmten Bahn. Vorzugsweise lässt sich der Rahmen durch eine rein lineare Translationsbewegung zwischen der Aufnahmeposition und der Parkposition hin und her bewegen.

In einer Ausgestaltung der Aufnahmevorrichtung umfasst die Haltevorrichtung mindestens ein Stellglied, welches ein Wasserfahrzeug, welches sich auf dem Rahmen befindet, nach unten auf die oder jede Kette zu drückt.

In einer Ausgestaltung der Aufnahmevorrichtung ist die Haltevorrichtung
- an der Tragstruktur oder an dem Rahmen montiert und
- so ausgestaltet, dass sie eine Bewegung eines aufzunehmenden Wasserfahrzeugs relativ zur Tragstruktur und zum Rahmen in eine Richtung parallel zur Bewegungsrichtung des Rahmens in die Parkposition ermöglicht.

Der Rahmen in der Aufnahmeposition befindet sich teilweise unterhalb der Wasseroberfläche, damit ein aufzunehmendes Wasserfahrzeug in eine Position oberhalb des Rahmens in der Aufnahmeposition fahren kann und damit mindestens ein Mitnehmer der Aufnahmevorrichtung von unten das Wasserfahrzeug greifen kann. In einer Ausgestaltung befindet der Rahmen in der oder einer Parkposition sich vollständig oberhalb der Wasseroberfläche. Diese Ausgestaltung reduziert die Gefahr, dass der Rahmen vom Wasser oder von einem im Wasser schwimmenden Gegenstand beschädigt wird, und reduziert insbesondere die Gefahr von Korrosion oder unerwünschtem Bewuchs auf dem Rahmen. In einer bevorzugten Ausgestaltung befindet sich nicht nur der Rahmen, sondern auch ein aufzunehmendes Wasserfahrzeug auf dem Rahmen vollständig oberhalb der Wasseroberfläche, wenn sich der Rahmen in der oder einer Parkposition befindet. Diese Ausgestaltung reduziert die Gefahr, dass das Wasserfahrzeug vom Wasser oder einem Gegenstand im Wasser beschädigt wird.

Vorzugsweise bewegt die oder jede bewegte Kette ein aufzunehmendes Wasserfahrzeug, welches temporär mit der Kette verbunden ist, in eine Richtung parallel zur Bewegungsrichtung des Rahmens in die Parkposition. Die Bewegungen des Rahmens und der Kette werden also parallel zueinander ausgeführt. Weitere Ausgestaltungen sind möglich, z.B. dass die oder eine Kette das Wasserfahrzeug schräg zur Bewegungsrichtung des Rahmens bewegt.

In einer Ausgestaltung umfasst die oder wenigstens eine Kette zwei einzelne Teilketten, zwischen denen eine Abfolge von Verbindungselementen, z.B. Rollen oder Stangen oder Stege, montiert ist. Diese Verbindungselemente fungieren als die Mitnehmer. Diese Ausgestaltung mit zwei verbundenen Teilketten ermöglicht eine besonders robuste Konstruktion der Kette.

In einer Ausgestaltung umfasst die Aufnahmevorrichtung eine erste endlose angetriebene Kette mit einer Abfolge von Mitnehmern und eine weitere endlose angetriebene Kette, die eine weitere Abfolge von Mitnehmern aufweist. Die beiden Ketten sind - gesehen in die Bewegungsrichtung des Rahmens von der Aufnahmeposition in die Parkposition - nebeneinander an dem Rahmen angebracht. Somit weist die Aufnahmevorrichtung eine linke Kette und eine rechte Kette auf. Vorzugsweise sind jeweils ein Mitnehmer der linken Kette und ein Mitnehmer der rechten Kette - gesehen in die Bewegungsrichtung des Rahmens - in gleicher Höhe angeordnet. Dank dieser Ausgestaltung vermag dieselbe Aufnahmevorrichtung wahlweise ein Wasserfahrzeug mit einem Rumpf oder mit zwei nebeneinander angeordneten Rümpfen, z.B. einen Katamaran, oder gleichzeitig zwei ausreichend schmale Wasserfahrzeuge nebeneinander aufzunehmen. Daher betrifft die Erfindung auch die Verwendung einer Aufnahmevorrichtung zum Aufnehmen eines Wasserfahrzeugs mit zwei nebeneinander angeordneten Rümpfen. Im Falle eines aufzunehmenden Wasserfahrzeugs mit zwei Rümpfen verhindern die beiden Ketten, dass das Wasserfahrzeug mit seitlichem Versatz oder so, dass die Längsachse des Wasserfahrzeugs schräg zur Bewegungsrichtung des Rahmens angeordnet ist, gezogen wird und dadurch das Wasserfahrzeug in eine unerwünschte Schräglage relativ zum Rahmen gerät. Diese unerwünschte Schräglage wird mit noch größerer Sicherheit verhindert, wenn jeweils zwei Mitnehmer auf gleicher Höhe angeordnet sind.

In einer Ausgestaltung der Erfindung sind jeweils ein Mitnehmer der ersten Kette und ein Mitnehmer der weiteren Kette - gesehen in die Bewegungsrichtung des Rahmens in die Parkposition - nebeneinander in gleicher Höhe angeordnet.

Ein aufzunehmendes Wasserfahrzeug befindet sich oberhalb der oder mindestens einer Kette und wird von mindestens einem Mitnehmer der bewegten Kette nach oben gezogen. In einer ersten Phase dieser Bewegung schwimmt das aufzunehmende Wasserfahrzeug noch auf dem Wasser. Vorzugsweise verhindert eine Haltevorrichtung der Aufnahmevorrichtung, dass das noch auf dem Wasser schwimmende Wasserfahrzeug eine Bewegung nach oben relativ zur Kette ausführt und dadurch den Kontakt zu den Mitnehmern verliert und wieder nach unten oder zur Seite rutscht. Diese Haltevorrichtung lässt sich zwischen einer Halteposition und einer Freigabeposition hin und her bewegen. Falls die Aufnahmevorrichtung an Bord eines weiteren Wasserfahrzeugs montiert ist, so verhindert die Haltevorrichtung auch, dass das aufgenommene Wasserfahrzeug aufgrund von Bewegungen des weiteren Wasserfahrzeugs von dem Rahmen in der Parkposition herunter rutscht.

In einer Ausgestaltung drückt die Haltevorrichtung in der Halteposition ein aufzunehmendes Wasserfahrzeug auf den Rahmen. In einer Ausführungsform ist die Haltevorrichtung an der Tragstruktur oder an dem Rahmen befestigt. Die Haltevorrichtung in der Halteposition hält das Wasserfahrzeug und ermöglicht dennoch, dass ein von der angetriebenen Kette gezogenes Wasserfahrzeug sich relativ zum Rahmen bewegen kann und durch die Haltevorrichtung bei der Bewegung gehalten wird. Vorzugsweise ist mindestens eine Laufrolle an der Haltevorrichtung montiert und kommt in Kontakt mit dem Wasserfahrzeug, wenn die Haltevorrichtung in der Halteposition ist.

Vorzugsweise führt eine Führungseinrichtung den Rahmen bei einer Bewegung von der Aufnahmeposition in die oder eine Parkposition. In einer Ausgestaltung vermag der geführte Rahmen ausschließlich eine lineare Bewegung von der Aufnahmeposition in die Parkposition durchzuführen, und die Führungseinrichtung verhindert jede seitliche oder schräge Bewegung des Rahmens, und zwar auch dann, wenn die Aufnahmevorrichtung an Bord eines weiteren Wasserfahrzeugs montiert ist, welches Wellenbewegungen ausgesetzt sein kann, während es das Wasserfahrzeug aufnimmt. Außerdem begrenzt die Führungseinrichtung vorzugsweise die lineare Bewegung des Rahmens in die Bewegungsrichtung und in die entgegengesetzte Richtung. Die Führungseinrichtung kann z.B. mindestens eine Abfolge von Laufrollen umfassen, die in einer Schiene, z.B. einem U-Profil, gelagert sind und entlang der Schiene rollen können. In einer Ausführungsform umfasst die Führungseinrichtung zwei Abfolgen von Laufrollen und zwei Schienen. Die oder jede Abfolge von Laufrollen kann an dem Rahmen montiert sein, die oder jede Schiene an der Tragstruktur. Die oder jede Schiene ist bevorzugt nach oben und nach unten durch jeweils zwei Anschlagelemente begrenzt, welche die mögliche Bewegung des Rahmens relativ zur Tragstruktur nach oben und nach unten begrenzten.

In einer Ausgestaltung der Aufnahmevorrichtung umfasst die Rampen-Führungseinrichtung
- mehrere Laufrollen und
- mindestens eine Schiene,
wobei die Laufrollen auf der oder einer Schiene gelagert sind.

In einer Ausgestaltung der Aufnahmevorrichtung ist die oder jede Schiene der Rampen-Führungseinrichtung an der Tragstruktur befestigt und die Laufrollen sind drehbar an dem Rahmen befestigt sind.

Vorzugsweise führt eine Leiteinheit der Aufnahmevorrichtung ein aufzunehmendes Wasserfahrzeug entlang des Rahmens, während die oder mindestens eine Kette das Wasserfahrzeug entlang des Rahmens zieht. Diese Ausgestaltung verringert weiter das Risiko, dass das Wasserfahrzeug - gesehen in die Bewegungsrichtung des Rahmens - zu einer Seite umkippt. Diese Leiteinheit für das Wasserfahrzeug kann aus ausschließlich passiven Bauteilen bestehen, z.B. aus Laufrollen.

Vorzugsweise führt der Rahmen eine lineare Bewegung aus, wenn er von der Aufnahmeposition in die Parkposition bewegt wird. Weitere Formen einer Bewegung sind ebenfalls möglich, z.B. eine Drehung um eine horizontale Achse, die senkrecht auf der Längsachse eines aufzunehmenden Wasserfahrzeugs und somit quer zur Fahrtrichtung des Wasserfahrzeugs steht. Die Führungseinrichtung für den Rahmen kann in diesem Falle einen Parallelogramm-Lenker umfassen.

In einer Ausgestaltung der Aufnahmevorrichtung weist der Rahmen - gesehen in die Bewegungsrichtung - ein U-förmiges Querschnittsprofil mit zwei seitlichen Trägern auf, wobei zwei Elemente der Wasserfahrzeug-Führungseinrichtung an den beiden seitlichen Trägern montiert sind.

In einer Ausgestaltung der Aufnahmevorrichtung befindet sich der Rahmen in der oder einer Parkposition vollständig oberhalb der Wasseroberfläche.

In einer Ausgestaltung der Aufnahmevorrichtung ist der Rahmen so ausgestaltet, dass ein auf dem Rahmen befindliches Wasserfahrzeug sich vollständig oberhalb der Wasseroberfläche befindet, wenn der Rahmen in der oder einer Parkposition ist.

In einer Ausgestaltung der Aufnahmevorrichtung ist die Ausdehnung des Rahmens in die Bewegungsrichtung geringer, als die Länge eines aufzunehmenden Wasserfahrzeugs.

In einer Ausgestaltung erkennt ein Sensor automatisch das Ereignis, dass der Rahmen die Parkposition oder ein aufzunehmendes Wasserfahrzeug auf dem Rahmen eine Verstauposition erreicht hat. Der Sensor kann eine Lichtschranke, einen Näherungssensor, einen Kontaktsensor und / oder eine Kamera und eine Bildauswerteeinheit umfassen. Das Ereignis, dass der Rahmen die Parkposition oder das Wasserfahrzeug die Verstauposition erreicht hat, löst den Schritt aus, dass der Ketten-Antrieb gestoppt wird. In einer Ausgestaltung wird der Ketten-Antrieb automatisch gestoppt, in einer anderen Ausgestaltung manuell.

Die lösungsgemäße Aufnahmevorrichtung vermag ein Wasserfahrzeug aus dem Wasser zu ziehen. In einer Ausgestaltung vermag die Aufnahmevorrichtung ein aufgenommenes Wasserfahrzeug aktiv wieder zu Wasser zu lassen. Hierfür wird der Rahmen aus der Parkposition in die Aufnahmeposition bewegt, wobei das Wasserfahrzeug sich noch auf dem Rahmen befindet und mindestens ein Mitnehmer der Aufnahmevorrichtung das Wasserfahrzeug temporär hält. Die oder jede Kette wird relativ zum Rahmen in die entgegengesetzte Richtung bewegt. Oder die Schwerkraft bewegt das Wasserfahrzeug zum Wasser, und die oder jede Kette kann sich frei drehen. Das Wasserfahrzeug gleitet nach unten oder wird nach unten bewegt und schwimmt auf dem Wasser auf.

Vorzugsweise ist mindestens ein Vorsprung an der Außenhülle eines aufzunehmenden Wasserfahrzeugs montiert, und zwar so, dass dieser oder mindestens ein Vorsprung sich unter Wasser befindet, wenn das Wasserfahrzeug auf dem Wasser schwimmt. Ein Mitnehmer der oder einer Kette der Aufnahmevorrichtung kommt mit dem oder einem Vorsprung des Wasserfahrzeugs in Kontakt, wenn der Rahmen in der Aufnahmeposition ist und das Wasserfahrzeug auf die Kette zu fährt. Wenn die Kette bewegt wird, zieht der Mitnehmer das Wasserfahrzeug am Vorsprung aus dem Wasser. Vorzugsweise ist der Rahmen mit der Kette relativ zur Tragstruktur schräg angeordnet. Weil die endlose Kette an dem Rahmen schräg ins Wasser reicht, greift der Mitnehmer das Wasserfahrzeug am Vorsprung, egal wie groß der Tiefgang des Wasserfahrzeugs ist. Diese Ausgestaltung erspart die Notwendigkeit, das Wasserfahrzeug mittels eines Seils oder einer Öse oder gar eines Krans aus dem Wasser zu ziehen.

Die Aufnahmevorrichtung kann an Bord eines weiteren und bevorzugt angetriebenen Wasserfahrzeugs, z.B. eines Mutterschiffs, einer schwimmenden Plattform oder auch an Land montiert sein. Das aufzunehmende Wasserfahrzeug kann ein Überwasserfahrzeug oder ein Unterwasserfahrzeug sein und einen eigenen Antrieb aufweisen oder ohne Antrieb sein. Insbesondere kann das aufzunehmende Wasserfahrzeug ein unbemanntes Überwasserfahrzeug oder Unterwasserfahrzeug sein, eine sogenannte Drohne, die ferngesteuert oder autonom gesteuert wird.

Nachfolgend ist die erfindungsgemäße Aufnahmevorrichtung anhand eines in den Zeichnungen dargestellten Ausführungsbeispiels näher erläutert. Hierbei zeigen
Fig. 1 in einer Seitenansicht eine erste Ausführungsform der Aufnahmevorrichtung mit dem Rahmen in der Aufnahmeposition;
Fig. 2 ein vorderes Segment eines aufzunehmenden Wasserfahrzeugs, welches mittels mehrerer Greifzähne temporär mit einer Kette der Aufnahmevorrichtung verbunden ist;
Fig. 3 eine Draufsicht auf den beweglichen Rahmen der ersten Ausführungsform mit einer Kette und ohne das Wasserfahrzeug (Schnitt A - A von Fig. 1);
Fig. 4 ein Querschnitt in der Ebene B - B durch den Rahmen von Fig. 3 mit dem Wasserfahrzeug von Fig. 2;
Fig. 5 eine Draufsicht auf das Stellglied für den Rahmen in der Ebene C - C von Fig. 1;
Fig. 6 eine Detailsicht eines vorderen Segments des Wasserfahrzeugs und eines hinteren Segments der Kette von Fig. 2;
Fig. 7 ein vorderes Segment eines weiteren aufzunehmenden Wasserfahrzeugs (zweite Ausführungsform), welches mittels weiterer Greifzähnen temporär mit einer weiteren Kette der Aufnahmevorrichtung verbunden ist;
Fig. 8 eine Draufsicht auf die linke Kette von Fig. 7;
Fig. 9 einen Querschnitt (Halbschnitt) durch den Rahmen der zweiten Ausführungsformen mit zwei Ketten, wobei eine Kette und die linke Hälfte des Wasserfahrzeugs von Fig. 7 gezeigt werden;
Fig. 10 eine Draufsicht auf den Rahmen mit zwei Ketten ohne das weitere Wasserfahrzeug.

Im Ausführungsbeispiel wird die Erfindung dafür eingesetzt, um ein bemanntes oder ein unbemanntes Boot, z.B. eine schwimmende Drohne, aus dem Wasser zu ziehen und an Bord eines Mutterschiffs 1 zu verbringen und dort in einer Verstauposition zu halten. Vorzugsweise hat das Boot einen eigenen Antrieb. Das Mutterschiff 1 hat ebenfalls einen eigenen Antrieb und fährt in eine Fahrtrichtung FR (in Fig. 1 von links nach rechts) über Wasser und vermag das Boot während der Fahrt aufzunehmen. Die Aufnahmevorrichtung des Ausführungsbeispiels ist an Bord des Mutterschiffs 1 montiert. Die Tragstruktur des Mutterschiffs 1 bildet im Ausführungsbeispiel die Tragstruktur der lösungsgemäßen Aufnahmevorrichtung.

Die Erfindung lässt sich gleichermaßen auch dafür verwenden, das Boot aus dem Wasser an Land zu ziehen. Die Aufnahmevorrichtung ist dann an Land und am Ufer montiert.

Im Folgenden werden zwei Ausführungsformen der lösungsgemäßen Aufnahmevorrichtung beschrieben, welche für jeweils eine Art von aufzunehmenden Booten verwendet werden. Die erste Ausführungsform wird dafür verwendet, um ein Boot 2 mit einem einzigen Rumpf aus dem Wasser zu ziehen, die zweite Ausführungsform für ein Boot 2.2 mit zwei Rümpfen, z.B. für einen Katamaran. Fig. 1 bis Fig. 4 und Fig. 6 beziehen sich auf die erste Ausführungsform (Boot 2 mit einem einzigen Rumpf), Fig. 7 bis Fig. 10 auf die zweite Ausführungsform (Boot 2.2 mit zwei Rümpfen), Fig. 5 auf beide Ausführungsformen.

Das Boot 2, 2.2 fährt von hinten in Fahrtrichtung FR auf das Mutterschiff 1 zu, bis es in einen Bereich oberhalb der Aufnahmevorrichtung kommt, und wird dann von der Aufnahmevorrichtung aufgenommen, was weiter unten beschrieben wird. Die Bezeichnungen "links" und "rechts" sowie "vorne" und "hinten" beziehen sich auf die gemeinsame Fahrtrichtung FR des Mutterschiffs 1 und des Boots 2, 2.2.

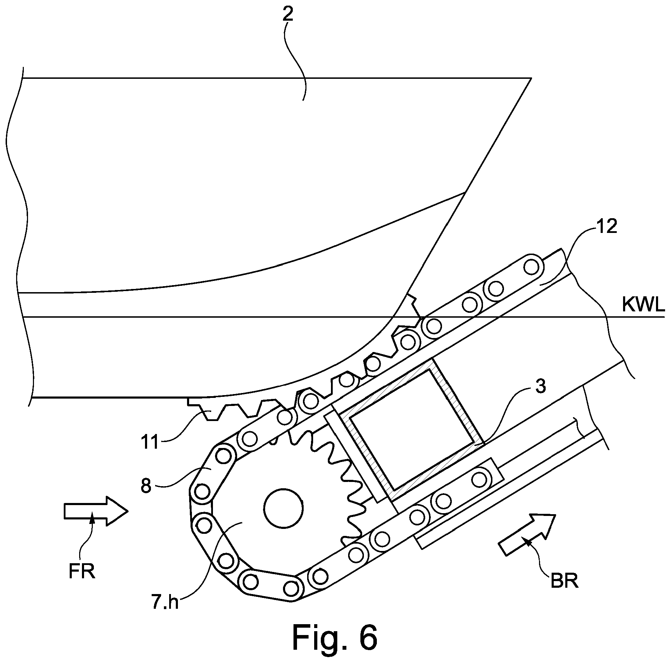

Das Boot 2 der ersten Ausführungsform besitzt eine einzige Abfolge von Vorsprüngen in Form von Greifzähnen 11, die zusammen eine Zahnkette bilden, oder Haken oder Sporne, wobei die Vorsprünge mittig an dem einzigen Rumpf des Boots 2 montiert sind und auf einen unteren Teil des Bugs und einen vorderen Teil des Kiels verteilt sind, vgl. Fig. 2 und Fig. 6. Vorzugsweise sind die Greifzähne 11 lösbar am Rumpf befestigt, so dass sich die Greifzähne 11 bei Verschleiß oder Bruch leicht ersetzen und erneuern lassen. Vorzugsweise sind die Greifzähne 11 aus nicht rostendem Edelstahl gefertigt, andere Materialien sind auch möglich.

Entsprechend sind zwei Abfolgen von Vorsprüngen, z.B. Greifzähnen 11.2, an den beiden Rümpfen des Boots 2.2 der zweiten Ausführungsform montiert, vgl. Fig. 7. Ein Greifzahn der linken Abfolge ist neben einem Greifzahn der rechten Abfolge angeordnet. Die Abstände zwischen jeweils zwei aufeinander folgenden Greifzähnen 11.2 des Boots 2.2 sind größer als die Abstände zwischen den Greifzähnen 11 einer Abfolge am Rumpf des Boots 2. Der Grund hierfür wird weiter unten erläutert.

Die Aufnahmevorrichtung des Ausführungsbeispiels umfasst folgende wesentliche Bestandteile:
- einen Rahmen 3 in Form eines Grundgerüsts, welcher schräg an der Tragstruktur 40 montiert ist und relativ zur Tragstruktur 40 linear beweglich ist,
- eine Kette in Form einer mittig angebrachten Doppelrollen-Förderkette 8 (erste Ausführungsform) oder zwei Ketten in Form einer linken Doppelrollen-Förderkette 8.l und einer rechten Doppelrollen-Förderkette 8.r (zweite Ausführungsform),
- eine Abfolge von Mitnehmern 14.1, 14.2, ... (erste Ausführungsform) oder eine linke Abfolge von Mitnehmern 14.l.1, 14.l.2, ... und eine rechte Abfolge von Mitnehmern 14.r.1, 14.r.2, ... (zweite Ausführungsform),
- einen Ketten-Antrieb für die oder jede Kette 8, 8.l, 8.r und
- ein Rahmen-Stellglied 10 für den Rahmen 3.

Der Rahmen 3 ist - gesehen in die Fahrtrichtung FR des Mutterschiffs 1 - in einer schräg ansteigenden Ebene in der Tragstruktur 40 angeordnet und lässt sich relativ zur Tragstruktur 40 linear zwischen einer Aufnahmeposition und mindestens einer Parkposition hin und her bewegen. Fig. 1 zeigt einen hinteren Teil der Tragstruktur 40 und des Rahmens 3 in der Aufnahmeposition. Die oder jede Kette 8, 8.l, 8.r ist beweglich an dem Rahmen 3 befestigt und wird bei einer Bewegung des Rahmens 3 mit bewegt. Der Rahmen 3 lässt sich relativ zur Tragstruktur 40 in eine schräg ansteigende Bewegungsrichtung BR aus der Aufnahmeposition in die oder eine Parkposition bewegen. In der Aufnahmeposition befindet sich ein hinterer Teil des Rahmens 3 und der oder jeder Kette 8, 8.l, 8.r unter der Konstruktions-Wasserlinie KWL, und ein vorderes Segment eines aufzunehmenden Boots 2, 2.2 kann in eine Position oberhalb der Kette 8, 8.l, 8.r gelangen. In der Parkposition befinden sich der Rahmen 3 und die oder jede Kette 8, 8.l, 8.r sowie ein aufgenommenes Boot 2, 2.2 vollständig oberhalb der Konstruktions-Wasserlinie KWL.

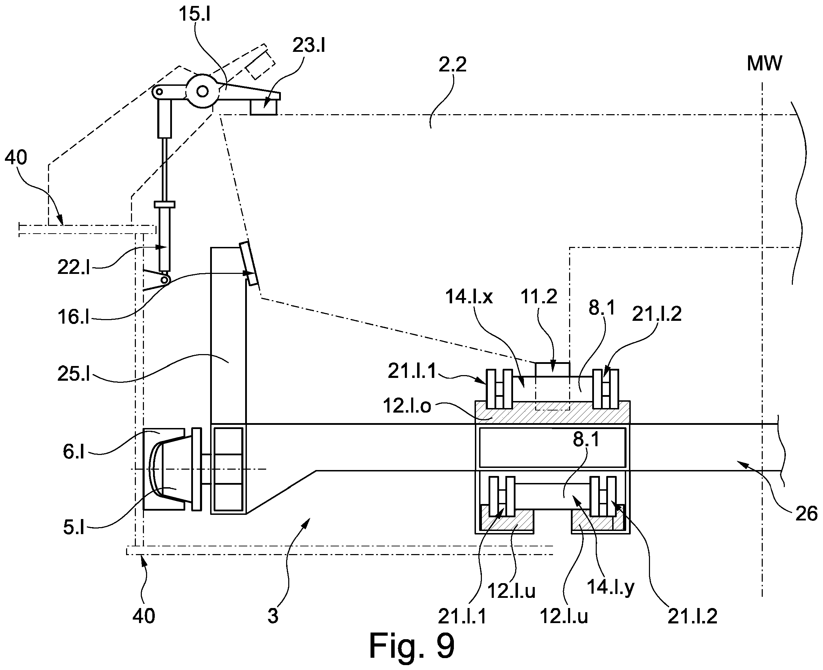

Wie in Fig. 1 zu sehen ist, kann die Länge des Rahmens 3, also die Ausdehnung in die Bewegungsrichtung BR, geringer sein als die Länge eines aufzunehmenden Boots 2, 2.2. Trotzdem hält der Rahmen 3 sicher das Boot 2, 2.2. Der Rahmen 3 des Ausführungsbeispiels hat einen U-förmigen Querschnitt mit einer Abfolge von mehreren horizontalen Querträgern sowie eine linke Abfolge 25.l und eine rechte Abfolge 25.r von seitlichen und annähernd senkrechten Trägern, vgl. Fig. 4 und Fig. 9. Die horizontalen Querträger bilden eine horizontale Plattform 26 des Rahmens 3.

In einer Ausgestaltung erfasst eine Sensoranordnung automatisch das Ereignis, dass das Boot 2, 2.2 temporär mit der Kette 8, 8.l, 8.r verbunden ist. Beispielsweise erfasst ein Sensor an einer Kette 8, 8.l, 8.r, dass ein Greifzahn 11, 11.2 in Kontakt mit einem Mitnehmer 14.1, 14.2, ..., 14.l.1, 14.l.2, ..., 14.r.1, 14.r.2, ... der Kette 8, 8.l, 8.r ist. Oder ein Sensor erfasst die Position des Boots 2, 2.2 relativ zum Rahmen 3 in eine Sensorrichtung parallel zur Fahrtrichtung FR oder zur Bewegungsrichtung BR, um den seitlichen Versatz des Boots 2, 2.2 relativ zum Rahmen 3 zu erfassen. Ein weiterer Sensor erfasst die Position des Boots 2, 2.2 relativ zum Rahmen 3 in eine Sensorrichtung senkrecht zur Fahrtrichtung FR und senkrecht zur Bewegungsrichtung BR, um zu erkennen, ob das Boot 2, 2.2 eine Kette 8, 8.1, 8.r erreicht hat. Anstelle eines Sensors kann auch ein Mensch an Bord des Mutterschiffs 1 dieses Ereignis erfassen.

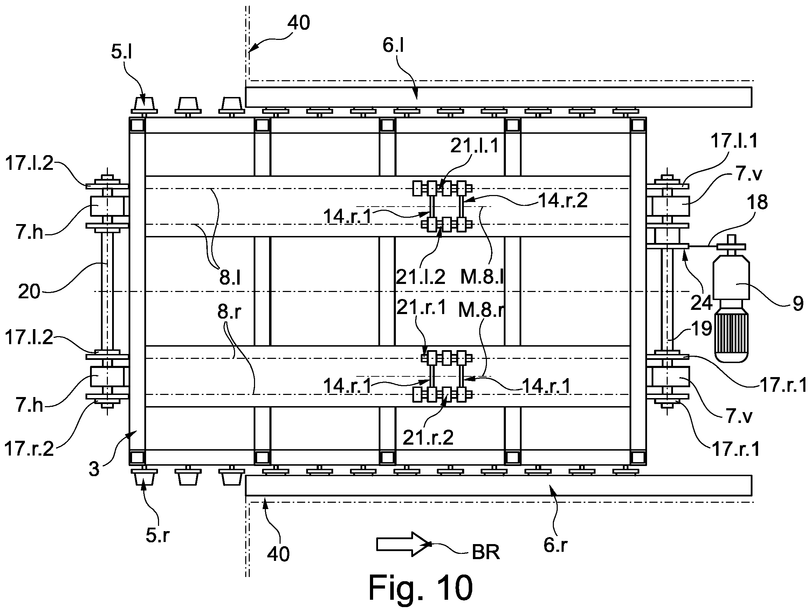

Eine Führungseinrichtung führt den Rahmen 3 bei einer Bewegung von der Aufnahmeposition in die Parkposition und bei einer entgegengesetzten Bewegung. Zur Führungseinrichtung des Ausführungsbeispiels gehören eine linke Abfolge 5.a von Laufrollen und eine rechte Abfolge 5.r von weiteren Laufrollen, wobei die Laufrollen 5.l, 5.r an dem Rahmen 3 befestigt sind und sich relativ zum Rahmen 3 um jeweils eine horizontale Drehachse drehen können, die senkrecht auf der Bewegungsrichtung BR steht. Vorzugsweise sind die Laufrollen 5.l, 5.r aus hartem Kunststoff gefertigt, mit jeweils einer einstellbaren Exzenterachse versehen und lassen sich leicht demontieren und ersetzen. Die Seitenansicht von Fig. 1 zeigt die rechte Abfolge 5.r, die Draufsicht von Fig. 3 und Fig. 10 beide Abfolgen 5.l und 5.r. Zur Führungseinrichtung gehören weiterhin zwei Schienen 6.l und 6.r in Form von U-Profilen, die beide zum Rahmen 3 hin gewandt sind, vgl. Fig. 4 und Fig. 9, vorzugsweise aus Stahl gefertigt sind und an der Tragstruktur 40 befestigt sind. Die linke Abfolge 5.l von Laufrollen wird drehbar in der linken Schiene 6.l gehalten, die rechte Abfolge 5.r drehbar in der rechten Schiene 6.r.

Die mittig angebrachten Doppelrollen-Förderkette 8 der ersten Ausführungsform umfasst zwei endlose Teilketten 21.1 und 21.2, die nebeneinander angeordnet sind. Jede Teilkette 21.1, 21.2 umfasst jeweils eine Abfolge von Kettengliedern, die gelenkig miteinander verbunden sind. Zwischen der linken Teilkette 21.1 und der rechten Teilkette 21.2 ist eine Abfolge von Mitnehmern in Form von Bolzen oder Rollen 14.1, 14.2, ... montiert, vgl. Fig. 3. Die Mitnehmer 14.1, 14.2, ... können sich bevorzugt relativ zu beiden Teilketten 21.1 und 21.2 um die eigenen Mittelachsen drehen. Jede Teilkette 21.1, 21.2 ist um jeweils zwei Kettenräder herum geführt, vgl. die Draufsicht von Fig. 3. Fig. 3 zeigt das vordere Kettenrad-Paar 17.1 und das hintere Kettenrad-Paar 17.2, die zusammen beide Teilketten 21.1 und 21.2 halten und führen. Das vordere Kettenrad-Paar 17.1 ist fest auf einer Welle montiert, das hintere Kettenrad-Paar 17.2 fest auf einer nicht angetriebenen Achse. Fig. 3 zeigt weiterhin die Mittellinie M.8 der Doppelrollen-Förderkette 8.

Wie in Fig. 4 zu sehen ist, läuft die Kette 8 um die von den Querträgern gebildete horizontale Plattform 26 herum. Ein oberes Segment der Kette 8 befindet sich oberhalb dieser horizontalen Plattform 26, ein unteres Segment unterhalb der Plattform 26. Das untere Segment der mittig angeordneten Kette 8 läuft über eine untere Führungsschiene 12.u, die an dem Rahmen 3 befestigt ist, mitsamt dem Rahmen 3 bewegt wird und vorzugsweise aus verschleißfestem und gleitfähigem Kunststoff gefertigt ist. Entsprechend läuft das obere Segment über eine obere Führungsschiene 12.o, die bevorzugt wie die untere Führungsschiene 12.u aufgebaut ist. Die Kette 8 berührt von oben beide Führungsschienen 12.o und 12.u. Jede Führungsschiene 12.o, 12.u für die Kette 8 ist so ausgestaltet, dass eine nur geringe Reibung zwischen der Kette 8 und der oberen Oberfläche der Führungsschiene 12.o, 12.u auftritt. Außerdem reduziert die Führungsschiene 12.o, 12.u den Verschleiß der Kette 8. Die Führungsschiene 12.o, 12.u lässt sich leichter austauschen und erneuern als die Kette 8. Fig. 4 zeigt zwei obere Einzel-Schienen 12.o und zwei untere Einzel-Schienen 12.u für die beiden Teilketten 21.1 und 21.2, die in die Führungsschienen 12.o bzw. 12.u eingelassen sind.

Entsprechend umfasst die linke Doppelrollen-Förderkette 8.l der zweiten Ausführungsform zwei linke endlose Teilketten 21.l.1 und 21.l.2, die in Fig. 8 gezeigt werden und jeweils eine Abfolge von Kettengliedern umfassen. Im gezeigten Beispiel ist in Höhe von jedem vierten Kettenglied jeweils ein Mitnehmer 14.l.1, 14.l.2, ... in Form eines Bolzens drehbar mit beiden Teilketten 21.l.1, 21.l.2 verbunden. Die rechte Doppelrollen-Förderkette 8.r ist entsprechend aufgebaut und umfasst zwei rechte Teilketten 21.r.1 und 21.r.2.

Jeweils ein Mitnehmer 14.l.1, 14.l.2, ... der linken Doppelrollen-Förderkette 8.l ist - gesehen in die Bewegungsrichtung BR - in gleicher Höhe wie ein Mitnehmer 14.r.1, 14.r.2, ... der rechten Doppelrollen-Förderkette 8.r angeordnet. Der Abstand zwischen zwei aufeinanderfolgenden Mitnehmern derselben Doppelrollen-Förderkette 8.l oder 8.r ist so groß, dass folgendes bewirkt wird: Ein Boot 2.2 mit zwei nebeneinander angeordneten Abfolgen von Greifzähnen 11.2 fährt mittig auf den Rahmen 3 zu, der in der Aufnahmeposition ist. Ein Mitnehmer 14.l.1, 14.l.2, ... der linken Doppelrollen-Förderkette 8.l kommt in Kontakt mit einem Greifzahn der linken Abfolge, ein Mitnehmer 14.r.1, 14.r.2, ... der rechten Förderkette 8.r mit einem Greifzahn der rechten Abfolge. Möglich ist, dass die Fahrtrichtung des Boots 2.2 auf die Aufnahmevorrichtung zu nicht exakt mit der Fahrtrichtung FR des Mutterschiffs 1 übereinstimmt. Trotzdem werden die beiden nebeneinander angeordneten Greifzähne von zwei Mitnehmern gefasst, die auf gleicher Höhe angeordnet sind. Der Abstand zwischen zwei Greifzähnen derselben Abfolge und der Abstand zwischen zwei Mitnehmern derselben Kette 8.l, 8.r sind ausreichend groß. Die synchrone Bewegung der Ketten 8.l und 8.r bringt das Boot 2.2 in eine Position, in der dessen Mittelachse parallel zur Fahrtrichtung FR des Mutterschiffs 1 angeordnet ist.

In Fig. 9 werden eine linke untere Führungsschiene 12.l.u für das untere Segment der linken Kette 8.l und eine linke obere Führungsschiene 12.l.o für das obere Segment der linken Kette 8.l gezeigt. Die rechte Kette 8.r wird entsprechend von zwei rechten Führungsschienen 12.r.u und 12.r.o geführt.

Die Draufsicht von Fig. 10 zeigt ein linkes vorderes Kettenrad-Paar 17.l.1 und ein linkes hinteres Kettenrad-Paar 17.l.2 für die linke Doppelrollen-Förderkette 8.l sowie die Mittelachse M.8.l der linken Doppelrollen-Förderkette 8.l. Die rechte Doppelrollen-Förderkette 8.r ist um ein rechtes vorderes Kettenrad-Paar 17.r.1 und ein rechtes hinteres Kettenrad-Paar 17.r.2 geführt. Die beiden vorderen Kettenrad-Paare 17.l.1 und 17.r.1 sind fest auf eine angetriebenen Welle 19 montiert, die beiden hinteren Kettenrad-Paare 17.l.2 und 17.r.2 auf eine nicht angetriebenen Achse 20, vgl. Fig. 10. Die Welle 19 ist in einem vorderen Lager 7.v drehbar an dem Rahmen 3 befestigt, und die Achse 20 ist in einem hinteren Lager 7.h drehbar an dem Rahmen 3 befestigt, vgl. Fig. 10. Weil die beiden vorderen Kettenrad-Paare 17.l.1 und 17.l.2 auf derselben Welle 19 und die beiden hinteren Kettenrad-Paare 17.l.2 und 17.r.2 auf derselben Achse 20 montiert sind, werden die vier Einzelketten 21.l.1, 21.l.2, 21.r.1 und 21.r.2 stets synchron und mit gleicher Geschwindigkeit bewegt.

In den Draufsichten von Fig. 3 und Fig. 8 sind nur Segmente der Ketten 8, 8.l, 8.r gezeigt. Fig. 9 zeigt eine linke obere Führungsschiene 12.l.o mit zwei Einzel-Schienen, die an dem Rahmen 3 befestigt ist und über welche das obere Segment der linken Doppelrollen-Förderkette 8.l läuft. Eine entsprechende rechte obere Führungsschiene 12.r.o ist unter dem oberen Segment der rechten Doppelrollen-Förderkette 8.r an dem Rahmen 3 montiert. Die unteren Segmente werden entsprechend geführt.

Die Greifzähne 11, 11.2 am aufzunehmenden Boot 2, 2.2 und die Kette 8, 8.l, 8.r mit den Mitnehmern 14.1, 14.2, ..., 14.l.1, 14.l.2, ..., 14.r.1, 14.r.2, ... sind dergestalt aufeinander abgestimmt, dass mindestens ein Greifzahn 11, 11.2 in den Zwischenraum zwischen zwei Mitnehmern 14.1, 14.2, ..., 14.l.1, 14.1.2, ..., 14.r.1, 14.r.2, ... eingreifen kann, vgl. Fig. 2 und Fig. 6. In der zweiten Ausführungsform sind an den beiden Rümpfen des Boots 2.2 zwei Abfolgen von Greifzähnen 11.2 montiert, jeweils eine Abfolge an einem Rumpf. Der Abstand zwischen den beiden Ketten 8.l und 8.r ist an den Abstand zwischen den beiden Abfolgen von Greifzähnen 11.2 angepasst. In einer Ausgestaltung (nicht gezeigt) lässt sich der Abstand zwischen den beiden Ketten 8.l und 8.r ändern und dadurch an den Abstand zwischen den beiden Abfolgen von Greifzähnen anpassen.

Jede Kette 8, 8.l, 8.r lässt sich entlang einer geschlossenen Kurve relativ zum Rahmen 3 bewegen. Im laufenden Betrieb führt die Kette 8, 8.l, 8.r keine sonstige Bewegung relativ zum Rahmen 3 aus. Ein Motor 9, bevorzugt ein Elektromotor, dreht die oder jede Kette 8, 8.l, 8.r entlang der geschlossenen Kurve. Vorzugsweise vermag der Motor 9 die oder jede Kette 8, 8.l, 8.r wahlweise in eine erste Richtung oder in eine entgegengesetzte zweite Richtung zu bewegen.

Wenn die oder jede Kette 8, 8.l, 8.r in die erste Richtung bewegt wird, so wird das obere Segment der Kette 8, 8.l, 8.r in die Bewegungsrichtung BR der Rahmen 3 gezogen und zieht ein Boot 2, 2.2 aus dem Wasser, wenn ein Greifzahn 11, 11.2 des Boots 2, 2.2 von einem Mitnehmer 14.1, 14.2, ..., 14.l.1, 14.1.2, ..., 14.r.1, 14.r.2, ... der oder einer Kette 8, 8.l, 8.r gefasst wird. Wird die Kette 8, 8.l, 8.r in die entgegengesetzte Richtung bewegt oder kann ungebremst laufen, so lässt sich ein Boot 2, 2.2 auf dem Rahmen 3 zum Wasser bewegen und zu Wasser lassen, wobei die Schwerkraft das Boot 2, 2.2 auf dem schrägen Rahmen 3 abwärts schiebt.

Der Motor 9 bewegt die oder jede Kette 8, 8.l, 8.r wie folgt: Eine Ausgangswelle des Motors 9 dreht ein Antriebs-Kettenrad. Das Antriebs-Kettenrad bewegt eine Antriebs-Rollenkette 18. Die Antriebs-Rollenkette 18 dreht ein angetriebenes Kettenrad 24, welches fest auf der Welle 19 montiert ist und die Welle 19 dreht. Weitere Antriebskonzepte sind möglich. Beispielsweise kann der Motor 9 im Inneren der Welle 19 angeordnet sein.

Die oder jede Kette 8, 8.l, 8.r zieht das Boot 2, 2.2 in die Bewegungsrichtung BR über den Rahmen 3. Fig. 4 zeigt eine linke Abfolge 4.l und eine rechte Abfolge 4.r von Laufrollen. Jede Laufrolle der linken Abfolge 4.l ist mittels eines linken Fundaments 13.l drehbar an dem Rahmen 3 montiert, jede Laufrolle der rechten Abfolge 4.r mittels eines rechten Fundaments 13.r. Vorzugsweise sind die Laufrollen aus einem elastischen Material, z.B. aus Gummi, oder aus einem verschleißarmen Kunststoff gefertigt. Das Boot 2, 2.2 gleitet über die Laufrollen 4.l und 4.r hinweg. In einer Ausgestaltung lässt sich der Abstand zwischen den Fundamenten 13.l und 13.r und damit der Abstand zwischen den Abfolgen von Laufrollen 4.l und 4.r verändern und damit an das Unterwasserprofil eines Boots 2, 2.2 anpassen. In Fig. 9 sind die Laufrollen 4.l und 4.r fortgelassen. Dank der Fundamente 13.l, 13.r kann das Boot 2, 2.2 einen Kiel aufweisen und kann trotzdem auf dem Rahmen 3 gehalten werden - das Fundament 13.l, 13.r sorgt für einen ausreichenden Abstand zur horizontalen Plattform 26 und dafür, dass das Boot 2, 2.2 horizontal auf dem Rahmen 3 ruht und nicht zu einer Seite geneigt ist.

In einer Ausgestaltung lassen die Fundamente 13.l und 13.r sich ausfahren und wieder einfahren, so dass die Laufrollen 4.l und 4.r relativ zum Rahmen 3 schräg oder vertikal nach oben oder nach unten bewegt werden können. Dadurch lässt die Aufnahmevorrichtung sich an die Tiefe eines Kiels des Boots 2, 2.2 sowie an dessen Unterwasserprofil anpassen.

An den beiden seitlichen Trägern 25.l, 25.r des Rahmens 3 ist jeweils eine Abfolge 16.l, 16.r von Führungselementen montiert, vgl. Fig. 4 und Fig. 9. Diese Führungselemente 16.l, 16.r führen und stützen das Boot 2, 2.2 auf dem Rahmen 3 von zwei Seiten und ermöglichen es trotzdem, dass das geführte Boot 2, 2.2 relativ zum Rahmen 3 in die Bewegungsrichtung BR gezogen wird. Jedes Führungselement 16.l, 16.r kann eine Laufrolle z.B. aus Gummi umfassen. Die Führungselemente 16.l, 16.r können auch als durchgehende Kunststoff-Gleitprofile ausgestaltet sein.

Ein Stellglied 10 vermag den Rahmen 3 mitsamt der Kette 8, 8.l, 8. r und einem Boot 2, 2.2 auf dem Rahmen 3 von der Aufnahmeposition in die oder eine Parkposition oder umgekehrt zu bewegen. Im Ausführungsbeispiel ist das Rampen-Stellglied 10 als eine hydraulische oder pneumatische Kolben-Zylinder-Einheit ausgestaltet, die mittig unterhalb des Rahmens 3 angeordnet ist und in einer Ausgestaltung nach vorne über den Rahmen 3 vorsteht, vgl. Fig. 1 und Fig. 5. Das Stellglied 10 kann auch als elektrischer Verstellmotor ausgestaltet sein. In der Situation von Fig. 1 ist der Zylinder des Rampen-Stellglieds 10 vollständig ausgefahren. Das vordere Ende der Kolben-Zylinder-Einheit 10 ist mittels eines vorderen mechanischen Verbindungselements 31 gelenkig mit der Tragstruktur 40 verbunden, das hintere Ende mittels eines hinteren mechanischen Verbindungselements 30 gelenkig mit dem Rahmen 3. Der Hub, den der Zylinder des Rampen-Stellglieds 10 ausführen kann, begrenzt die mögliche lineare Bewegung des Rahmens 3 relativ zur Tragstruktur 40.

Das Boot 2, 2.2 wird mit Hilfe der Kette 8, 8.1, 8.r und der Bewegung des Rahmens 3 in die Parkposition aus dem Wasser gezogen und selber in eine Verstauposition an Bord des Mutterschiffs 1 verbracht. In dieser Verstauposition befindet das Boot 2, 2.2 sich vorzugsweise vollständig im Inneren des Mutterschiffs 1 und ragt nicht über die Außenhülle hervor. Möglich ist, eine Klappe oder ein Tor des Mutterschiffs 1 zu schließen und das Boot 2, 2.2 in der Verstauposition vor Umgebungseinflüssen zu schützen. Diese Ausgestaltung verringert die elektronische Signatur (den Radarquerschnitt) des Mutterschiffs, also die Erkennbarkeit in einem Radarbild. Das Boot 2, 2.2 in der Verstauposition kann auch auf einem freien Deck des Mutterschiffs 1 positioniert sein.

In einer Ausgestaltung bleibt das Boot 2, 2.2 auf dem Rahmen 3, solange es an Bord des Mutterschiffs 1 in der Verstauposition verbleibt, und mindestens ein Greifzahn 11, 11.2 bleibt in Verbindung mit einem Mitnehmer 14.1, 14.2, ..., 14.l.1, 14.l.2, ..., 14.r.1, 14.r.2, .... In einer Ausgestaltung erfasst ein Sensor (nicht gezeigt) das Ereignis, dass der Rahmen 3 die einzig mögliche Parkposition erreicht hat. Der Sensor kann einen Kontaktschalter oder einen Näherungsschalter oder eine Lichtschranke umfassen. Möglich ist auch, dass eine Kamera Bilder vom Boot 2, 2.2 auf dem Rahmen 3 aufnimmt und eine Bildauswerteeinheit diese Bilder auswertet und automatisch das Ereignis erfasst. Die Erfassung des Ereignisses, dass der Rahmen 3 die Parkposition erreicht hat, löst die Schritte aus, dass das Rampen-Stellglied 10 und der Motor 9 für die Kette 8, 8.l, 8.r gestoppt werden. In einer Abwandlung werden die Bewegungen des Rahmens 3 und / oder der oder jeder Kette 8, 8.l, 8.r dann gestoppt, wenn das Boot 2, 2.2 eine vorgegebene Position relativ zur Tragstruktur 40 erreicht hat, z.B. das Heck des Boots 2, 2.2 eine bestimmte Stelle des Rahmens 40 erreicht hat. Die Parkposition des Rahmens 3 kann also von der Länge des Boots 2, 2.2 und von der Lage des Boots 2, 2.2 auf dem Rahmen 3 abhängen. Diese Ausgestaltung vermeidet, das Boot 2, 2.2 weiter als nötig aus dem Wasser ziehen zu müssen. Auch der Rahmen 3 wird nur so weit als nötig bewegt.

In einer Ausgestaltung hält das Rampen-Stellglied 10 den Rahmen 3 in der Parkposition, und der Motor 9 verhindert, dass die Kette 8, 8.l, 8.r sich dreht, solange das Boot 2, 2.2 in der Verstauposition bleiben soll. In einer alternativen Ausgestaltung hält eine Arretiereinheit den Rahmen 3 in der Parkposition. Vorzugsweise hält ein Federelement einen Arretierkörper (nicht gezeigt) in einer Arretierposition. Dadurch hält der Arretierkörper die Rahmen 3 in der Parkposition, bis ein Stellglied (nicht gezeigt) den Arretierkörper gegen die Federkraft in eine Freigabeposition zieht und der Rahmen 3 wieder bewegt werden kann. Diese Ausgestaltung reduziert weiter die Gefahr, dass der Rahmen 3 mit dem Boot 2, 2.2 ungewollt aus der Parkposition nach unten geleitet. In einer Ausgestaltung arretiert diese oder eine andere Arretiereinheit auch die oder jede Kette 8, 8.l, 8.r.

Das Boot 2, 2.2 schwimmt auch dann noch mit einem hinteren Teil auf dem Wasser, wenn ein Greifzahn 11, 11.2 von einem Mitnehmer 14.1, 14.2, ..., 14.l.1, 14.1.2, ..., 14.r.1, 14.r.2, ... gefasst wird und eine Kette 8, 8.l, 8.r das Boot 2, 2.2 aus dem Wasser zieht. Erst kurz bevor der Rahmen 3 die Parkposition erreicht hat, verlässt das Boot 2, 2.2 vollständig das Wasser. Das Boot 2, 2.2 soll auch bei Wellengang den Kontakt zur Kette 8, 8.l, 8.r halten. Außerdem soll das Boot in der Parkposition des Rahmens 3 sicher gehalten werden und sicher gelagert sein. Daher hält im Ausführungsbeispiel eine Haltevorrichtung mit einem linken Bestandteil 15.l und einem entsprechenden rechten Bestandteil 15.r das Boot 2, 2.2 auf der Rahmen 3 und dort in einer Position, in der das Boot 2, 2.2 mit der Kette 8, 8.l, 8.r verbunden bleibt. Fig. 9 zeigt den linken Bestandteil 15.l, in Fig. 4 ist dieser fortgelassen. Ein Stellglied 22.l in Form einer Kolben-Zylinder-Einheit bewegt den linken Bestandteil 15.l zwischen einer Halteposition (durchgezogene Linie) und einer Freigabeposition (gestrichelte Linie) hin und her. Wenn der Bestandteil 15.l in der Halteposition ist, berührt ein Kontaktelement 23.l von oben das Boot 2, 2.2 auf dem Rahmen 3. In der Freigabeposition tritt ein Abstand zwischen dem linken Bestandteil 15.l und dem Boot 2, 2.2 auf dem Rahmen 3 auf. Entsprechend vermag ein Stellglied 22.r den rechten Bestandteil 15.r zu bewegen.

Verschiedene Ausgestaltungen sind möglich, wie die Haltevorrichtung 15.l, 15.r ein Boot 2, 2.2 auf der Rahmen 3 hält. In einer Ausgestaltung sind die Bestandteile 15.l, 15.r fest an der Tragstruktur 40 montiert, in einer anderen Ausgestaltung an dem Rahmen 3 und werden mit dem Rahmen 3 mit bewegt.

In einer Ausgestaltung vermag das Kontaktelement 23.l, 23.r das Boot 2, 2.2 ausschließlich dann zu halten, wenn das Boot 2, 2.2 die Verstauposition erreicht hat. Das Kontaktelement 23.l, 23.r ist z.B. als ein Gummipuffer ausgestaltet. In einer anderen Ausgestaltung kann das Boot 2, 2.2 sich auch dann relativ zum Kontaktelement 23.l, 23.r bewegen, wenn das Kontaktelement 23.l, 23.r das Boot 2, 2.2 auf dem Rahmen 3 berührt. Jedes Kontaktelement 23.l, 23.r umfasst in einer Ausgestaltung eine Laufrolle, die sich um eine Achse drehen kann, welche senkrecht auf der Bewegungsrichtung BR des Rahmens 3 steht. Diese Drehachse kann dauerhaft horizontal sein oder sich um eine Achse parallel zur Bewegungsrichtung BR drehen können und sich an die Oberkante des Boots-Rumpfs anpassen.

In einer Ausgestaltung werden die Bestandteile 15.l, 15.r dann in die Halteposition bewegt, wenn das Boot 2, 2.2 seine Verstauposition erreicht hat. Die Haltevorrichtung 15.l, 15.r kann an der Tragstruktur 40 montiert sein, vgl. Fig. 9, oder an dem Rahmen 3. In einer anderen Ausgestaltung wird die Haltevorrichtung 15.l, 15.r bereits in die Halteposition bewegt, während das Boot 2, 2.2 noch von der Kette 8, 8.l, 8.r und der Bewegung des Rahmens 3 aus dem Wasser gezogen wird. Diese Ausgestaltung wird zweckmäßigerweise mit den Laufrollen als Kontaktelemente 23.l, 23.r kombiniert.

In einer Ausgestaltung übt jedes Haltevorrichtungs-Stellglied 22.l, 22.r einen Druck auf das Kontaktelement 23.l, 23.r aus und wirkt als ein Federelement. Bevorzugt wird der Druck gemessen, den das Stellglied 22.l, 22.r auf das Boot 2, 2.2 auf dem Rahmen 3 ausübt, z.B. indem der hydraulischen Druck in einem Fluid-Kreislauf für die Stellglieder 22.l, 22.r gemessen wird. Das Stellglied 22.l, 22.r bewegt den Bestandteil 15.l, 15.r auf das Boot 2, 2.2 zu, solange der ausgeübte Druck unter einer vorgegebenen Druckschranke bleibt, und stoppt dann die Bewegung des Bestandteils 15.l, 15.r. Dadurch wird sichergestellt, dass die Haltevorrichtung 15.l, 15.r das Boot 2, 2.2 nicht beschädigt. Trotzdem kann die Haltevorrichtung 15.l, 15.r nacheinander Boote mit unterschiedlichen vertikalen Abmessungen auf dem Rahmen 3 halten.

Ein Boot 2, 2.2 wird im Ausführungsbeispiel wie folgt aufgenommen:
- Der Zylinder des Rampen-Stellglieds 10 fährt aus und bewegt den Rahmen 3 aus der oder einer Parkposition in die Aufnahmeposition.
- Das Boot 2, 2.2 fährt von hinten in mittiger Orientierung auf das Mutterschiff 1 zu, bis das Boot 2, 2.2 die oder eine Kette 8, 8.l, 8.r erreicht. Dieses Ereignis wird vorzugsweise automatisch erfasst.
- Spätestens jetzt beginnt der Motor 9 zu rotieren und bewegt die oder jede Kette 8, 8.l, 8.r.
- Mindestens ein Greifzahn 11, 11.2 pro Rumpf des Boots 2, 2.2 wird von hinten von einem Mitnehmer 14.1, 14.2, ..., 14.l.1, 14.1.2, ..., 14.r.1, 14.r.2, ... gefasst. Die oder jede Kette 8, 8.l, 8.r zieht das dergestalt gefasste Boot 2, 2.2 auf den Rahmen 3. Das Boot 2, 2.2 gleitet über die Laufrollen 4.l, 4.r und entlang der Führungselemente 16.l, 16.r.
- In einer Ausgestaltung werden bereits jetzt die Bestandteile 15.l, 15.r der Haltevorrichtung in die Halteposition verbracht und drücken das Boot 2, 2.2 noch unten auf den Rahmen 3.
- Zeitlich überlappend mit dem Vorgang, das Boot 2, 2.2 auf den Rahmen 3 zu ziehen, wird der Zylinder des Rampen-Stellglieds 10 wieder eingezogen. Dadurch wird der Rahmen 3 mit der oder jeder bewegten Kette 8, 8.l, 8.r und dem temporär verbundenen Boot 2, 2.2 aus der Aufnahmeposition in die Bewegungsrichtung BR in die oder eine Parkposition gezogen. Die Laufrollen 5.l, 5.r an dem Rahmen 3 gleiten entlang der Schienen 6.l, 6.r.
- Sobald der Rahmen 3 die oder eine Parkposition erreicht hat und / oder das Boot 2, 2.2 vollständig aus dem Wasser gezogen ist und seine Verstauposition erreicht hat, werden die Bewegung der oder jeder Kette 8, 8.l, 8.r sowie die Bewegung des Zylinders des Rampen-Stellglieds 10 gestoppt.
- In einer Ausgestaltung werden der Rahmen 3 und / oder die Kette 8, 8.l, 8.r arretiert.
- In einer Ausgestaltung werden die Bestandteile 15.l, 15.r der Haltevorrichtung erst jetzt in die Halteposition bewegt.

Das Boot 2, 2.2 bleibt im Ausführungsbeispiel auf dem Rahmen 3 in der Verstauposition, bis es wieder zu Wasser gelassen werden soll. Hierfür werden die entsprechenden umgekehrten Schritte durchgeführt. In einer Ausgestaltung dreht der Motor 9 in die Kette 8, 8.l, 8.r in die entgegengesetzte Richtung, so dass die Kette 8, 8.l, 8.r das Boot 2, 2.2 ins Wasser zieht. In einer anderen Ausgestaltung bewegt die Schwerkraft das Boot 2, 2.2 von dem schrägen Rahmen 3 ins Wasser. Möglich ist, dass der als Elektromotor ausgestaltete Motor 9 als Bremse und Generator wirkt, wenn das Boot 2, 2.2 zu Wasser gleitet.

**Bezugszeichen**

| | |
|---|---|
| 1 | Mutterschiff, trägt die Aufnahmevorrichtung des Ausführungsbeispiels |
| 2 | aufzunehmendes Wasserfahrzeug mit einem Rumpf und mehreren Greifzähnen 11 (erste Ausführungsform) |
| 2.2 | aufzunehmendes Wasserfahrzeug mit zwei Rümpfen und mehreren Greifzähnen 11.2 an jedem Rumpf (zweite Ausführungsform) |
| 3 | Rahmen, relativ zur Tragstruktur 40 des Mutterschiff 1 linear beweglich, umfasst die horizontale Plattform 26 und die seitlichen Träger 25.l, 25.r |
| 4.l | links angeordnete Laufrollen zum Führen des Wasserfahrzeugs 2, 2.2 relativ zum Rahmen 3, auf dem linken Fundament 13.l montiert |
| 4.r | rechts angeordnete Laufrollen zum Führen des Wasserfahrzeugs 2, 2.2 relativ zum Rahmen 3, auf dem rechten Fundament 13.r montiert |
| 5.l | links angeordnete Laufrollen zum Führen des Rahmens 3 relativ zur Tragstruktur 40 des Mutterschiffs 1 |
| 5.r | rechts angeordnete Laufrollen zum Führen des Rahmens 3 relativ relativ zur Tragstruktur 40 des Mutterschiffs 1 |
| 6.l | Führungsschiene zum Halten der links angeordneten Laufrollen 5.l, gleiten entlang der linken Führungsschiene 6.l |
| 6.r | Führungsschiene zum Halten der rechts angeordneten Laufrollen 5.r, gleiten entlang der rechten Führungsschiene 6.r |
| 7.h | Lager für die Achse 20 der Kettenrad-Paare 17.l.2, 17.r.2 |
| 7.v | Lager für die Antriebswelle 19 der Kettenrad-Paare 17.l.1, 17.r.1 |
| 8 | mittig angeordnete Doppelrollen-Förderkette der ersten Ausführungsform, umfasst die Teilketten 21.1 und 21.2 und die Mitnehmer 14.1, 14.2, ..., wird über die Rollenketten-Führungsschienen 12.o und 12.u geführt |
| 8.l | linke Doppelrollen-Förderkette der zweiten Ausführungsform, umfasst die Teilketten 21.l.1 und 21.l.2 und die Mitnehmer 14.l.1, 14.l.2, ..., wird über die linke Rollenketten-Führungsschienen 12.l.o und 12.l.u geführt |
| 8.r | rechte Doppelrollen-Förderkette der zweiten Ausführungsform, umfasst die Teilketten 21.r.1 und 21.r.2 und die Mitnehmer 14.r.1, 14.r.2, ..., wird über die rechten Rollenketten-Führungsschienen 12.r.o und 12.r.u geführt |
| 9 | Antriebsmotor für die Doppelrollen-Förderkette 8, 8.l, 8.r, dreht die Antriebsrollenkette 18 |
| 10 | hydraulische oder pneumatische Kolben-Zylinder-Einheit, fungiert als Stellglied für den Rahmen 3, gelenkig an den Verbindungselementen 30 und 31 montiert |
| 11 | Greifzähne am Wasserfahrzeug 2, fungieren als Vorsprünge |
| 11.2 | Greifzähne am Wasserfahrzeug 2.2, fungieren als weitere Vorsprünge |
| 12.o | obere Rollenketten-Führungsschiene aus Kunststoff für das obere Segment der mittig angeordneten Doppelrollen-Förderkette 8 |
| 12.u | untere Rollenketten-Führungsschiene aus Kunststoff für das untere Segment der mittig angeordneten Doppelrollen-Förderkette 8 |
| 12.l.o | linke obere Rollenketten-Führungsschiene aus Kunststoff für das obere Segment der linken Doppelrollen-Förderkette 8.l |
| 12.l.u | linke untere Rollenketten-Führungsschiene aus Kunststoff für das untere Segment der linken Doppelrollen-Förderkette 8.l |
| 12.r.o | rechte obere Rollenketten-Führungsschiene aus Kunststoff für das obere Segment der rechten Doppelrollen-Förderkette 8.r |
| 12.r.u | rechte untere Rollenketten-Führungsschiene aus Kunststoff für das untere Segment der rechten Doppelrollen-Förderkette 8.r |
| 13.l | Fundament für die linken Laufrollen 4.l, an dem Rahmen 3 montiert |
| 13.r | Fundament für die rechten Laufrollen 4.r, an dem Rahmen 3 montiert |
| 14.1, 14.2, ... | Abfolge von Bolzen zwischen den beiden Teilketten 21.1 und 21.2 der mittig angeordneten Doppelrollen-Fördererkette 8, fungieren als Mitnehmer für die mittige Abfolge von Greifzähnen 11 |
| 14.1.1, 14.l.2, ... | Abfolge von Bolzen zwischen den beiden Teilketten 21.l.1 und 21.l.2 der linken Doppelrollen-Förderkette 8.l, fungieren als Mitnehmer für die linke Abfolge von Greifzähnen 11.2 |
| 14.r.1, 14.r.2, ... | Abfolge von Bolzen zwischen den beiden Teilketten 21.r.1 und 21.r.2 der rechten Doppelrollen-Förderkette 8.r, fungieren als Mitnehmer für die rechte Abfolge von Greifzähnen 11.2 |
| 15.l | linker Bestandteil der Haltevorrichtung zum Halten des Wasserfahrzeugs 2, 2.2 auf dem Rahmen 3, umfasst das Kontaktelement 22.l, lässt sich vom linken Stellglied 22.l bewegen |
| 15.r | rechter Bestandteil der Haltevorrichtung zum Halten des Wasserfahrzeugs 2, 2.2 auf dem Rahmen 3, umfasst das Kontaktelement 22.r, lässt sich vom rechten Stellglied 22.r bewegen |
| 16.l | links angeordnete Führungselemente zum Führen des Wasserfahrzeugs 2, 2.2 entlang des Rahmens 3, am linken seitlichen Träger 25.l montiert |
| 16.r | rechts angeordnete Führungselemente zum Führen des Wasserfahrzeugs 2, 2.2 entlang des Rahmens 3, am rechten seitlichen Träger 25.r montiert |
| 17.1, 17.2 | Kettenrad-Paare für die mittige Doppelrollen-Förderkette 8 |
| 17.l.1, 17.1.2 | Kettenrad-Paare für die linke Doppelrollen-Förderkette 8.r |
| 17.r.1, 17.r.2 | Kettenrad-Paare für die rechte Doppelrollen-Förderkette 8.r |
| 18 | Antriebs-Rollenkette zum Drehen des Kettenrads 24 auf der Welle 19, wird vom Motor 9 gedreht |
| 19 | Antriebswelle zum Drehen der Kettenräder 17.l.1, 17.r.1, von der Antriebs-Rollenkette 18 gedreht, im Lager 7.v gelagert |
| 20 | nicht angetriebene Achse, auf der die Kettenräder 17.l.2, 17.r.2 montiert sind, im Lager 7.h gelagert |
| 21.1, 21.2 | Teilketten der mittig angeordneten Doppelrollen-Förderkette 8 |
| 21.l.1, 21.1.2 | Teilketten der linken Doppelrollen-Förderkette 8.l |
| 21.r.1, 21.r.2 | Teilketten der rechten Doppelrollen-Förderkette 8.r |
| 22.l | linke Kolben-Zylinder-Einheit, bewegt den linken Bestandteil 15.l der Haltevorrichtung zwischen der Freigabeposition und der Halteposition hin und her, fungiert als ein Federelement |
| 22.r | rechte Kolben-Zylinder-Einheit, bewegt den rechten Bestandteil 15.r der Haltevorrichtung zwischen der Freigabeposition und der Halteposition hin und her, fungiert als ein Federelement |
| 23.l | Kontaktelement des linken Bestandteils 15.l der Haltevorrichtung, kommt in Kontakt mit dem Boot 2, 2.2, kann eine Laufrolle aufweisen |
| 23.r | Kontaktelement des rechten Bestandteils 15.r der Haltevorrichtung, kommt in Kontakt mit dem Boot 2, 2.2, kann eine Laufrolle aufweisen |
| 24 | Kettenrad auf der Welle 19, wird von der Antriebs-Rollenkette 18 angetrieben |
| 25.l, 25.r | seitliche Träger des Rahmens 3, an der horizontalen Plattform 26 montiert |
| 26 | horizontale Plattform des Rahmens 3, um welche die Ketten 8, 8.l, 8.r herum geführt sind |
| 30 | mechanisches Verbindungselement zwischen der hydraulischen Kolben-Zylinder-Einheit 10 und dem Rahmen 3 |
| 31 | mechanisches Verbindungselement zwischen der hydraulischen Kolben-Zylinder-Einheit 10 und der Tragstruktur 40 des Mutterschiffs 1 |
| 40 | Tragstruktur der Aufnahmevorrichtung, wird von der Tragstruktur des Mutterschiffs 1 gebildet, trägt den Rahmen 3 |
| BR | Bewegungsrichtung des Rahmens 3 aus der Aufnahmeposition in die Parkposition, zugleich Bewegungsrichtung des jeweiligen oberen Segments jeder Kette 8, 8.l, 8.r relativ zum Rahmen 3 |
| FR | übereinstimmende Fahrtrichtung des Mutterschiffs 1 und des aufzunehmenden Boots 2, 2.2 auf dem Wasser |
| KWL | Konstruktions-Wasserlinie des Mutterschiffs 1 |
| M.8.l | Mittelachse der linken Doppelrollen-Förderkette 8.l, befindet sich mittig zwischen den linken Teilketten 21.l.1 und 21.l.2 |
| M.8.r | Mittelachse der rechten Doppelrollen-Förderkette 8.r, befindet sich mittig zwischen den rechten Teilketten 21.r.1 und 21.r.2 |
| M.8 | Mittelachse der mittig angeordneten Doppelrollen-Förderkette 8, befindet sich mittig zwischen den Teilketten 21.1 und 21.2 |
| MW | Mittellinie des Wasserfahrzeugs 2, 2.2 |

## Patentansprüche

1. Aufnahmevorrichtung zum Aufnehmen mindestens eines Wasserfahrzeugs (2, 2.2),
wobei die Aufnahmevorrichtung
• eine Tragstruktur (40),
• einen von der Tragstruktur (40) gehaltenen Rahmen (3),
• mindestens eine endlose Kette (8, 8.l, 8.r) mit einer Abfolge von Mitnehmern (14.1, 14.2, ..., 14.l.1, 14.1.2, ..., 14.r.1, 14.r.2, ...) und
• einen Ketten-Antrieb (9, 17.1, ..., 18, 19)
umfasst,
wobei der Rahmen (3) zum Tragen eines aufzunehmenden Wasserfahrzeugs (2, 2.2) ausgestaltet ist,
wobei die oder jede Kette (8, 8.l, 8.r)
• mechanisch mit dem Rahmen (3) verbunden ist und
• relativ zum Rahmen (3) entlang jeweils einer geschlossenen Kurve bewegbar ist,
wobei der Ketten-Antrieb (9, 17.1, ..., 18, 19) dazu ausgestaltet ist, die oder jede Kette (8, 8.l, 8.r) relativ zum Rahmen (3) zu bewegen, und
wobei die Aufnahmevorrichtung dazu ausgestaltet ist,
ein auf dem Wasser schwimmendes Wasserfahrzeug (2, 2.2), welches temporär mit einen Mitnehmer (14.1, 14.2, ..., 14.l.1, 14.l.2, ..., 14.r.1, 14.r.2, ...) der oder einer Kette (8, 8.l, 8.r) verbunden ist,
durch Bewegen der Kette (8, 8.l, 8.r) aus dem Wasser und auf den Rahmen (3) zu ziehen,
**dadurch gekennzeichnet, dass**
die Aufnahmevorrichtung ein Rahmen-Stellglied (10) umfasst,
wobei der Rahmen (3) relativ zur Tragstruktur (40) zwischen
• einer Aufnahmeposition und
• mindestens einer Parkposition
linear beweglich ist,
wobei die Kette (8, 8.l, 8.r) dann, wenn der Rahmen (3) in der Aufnahmeposition ist,
sich wenigstens teilweise unter der Wasseroberfläche (KWL) befindet und
wobei das Rahmen-Stellglied (10) dazu ausgestaltet ist,
den Rahmen (3) mitsamt der oder jeder Kette (8, 8.l, 8.r) und einem temporär mit der Kette (8, 8.l, 8.r) verbundenen Wasserfahrzeug (2, 2.2)
von der Aufnahmeposition in die oder eine Parkposition zu ziehen.

2. Aufnahmevorrichtung nach Anspruch 1,
**dadurch gekennzeichnet, dass**
die Aufnahmevorrichtung eine erste endlose Kette (8.l) und eine weitere endlose Kette (8.r) umfasst, die jeweils
• mechanisch mit dem Rahmen (3) verbunden sind,
• eine Abfolge von Mitnehmern (14.r.1, 14.r.2, ...) aufweisen und
• relativ zum Rahmen (3) entlang einer geschlossenen Kurve bewegbar ist,
wobei die beiden geschlossenen Kurven parallel zueinander angeordnet sind,
wobei die erste Kette (8.l) und die weitere Kette (8.r) - gesehen in die Bewegungsrichtung (BR) des Rahmens (3) in die Parkposition - nebeneinander angeordnet sind und
wobei der Ketten-Antrieb (9, 17.1, ..., 18, 19) dazu ausgestaltet ist, die erste Kette (8.l) und die weitere Kette (8.r) relativ zum Rahmen (3) zu bewegen.

3. Aufnahmevorrichtung nach einem der vorstehenden Ansprüche,
**dadurch gekennzeichnet, dass**
die Aufnahmevorrichtung eine Haltevorrichtung (15.l, 15.r) umfasst,
welche relativ zum Rahmen (3) zwischen einer Halteposition und einer Freigabeposition beweglich ist,
wobei die Haltevorrichtung (15.l, 15.r) in der Halteposition eine Bewegung eines auf dem Rahmen (3) befindlichen Wasserfahrzeugs (2, 2.2) relativ zu der oder einer Kette (8, 8.l, 8.r) nach oben verhindert und
wobei ein Abstand zwischen einem Wasserfahrzeug (2, 2.2) auf dem Rahmen (3) und der Haltevorrichtung (15.l, 15.r) in der Freigabeposition auftritt.

4. Aufnahmevorrichtung nach einem der vorstehenden Ansprüche,
**dadurch gekennzeichnet, dass**
die Aufnahmevorrichtung eine Rampen-Führungseinrichtung (5.l, 5.r, 6.l, 6.r) umfasst,
wobei die Rampen-Führungseinrichtung (5.l, 5.r, 6.l, 6.r) dazu ausgestaltet ist,
den Rahmen (3) bei einer Bewegung relativ zur Tragstruktur (40) von der Aufnahmeposition in die Parkposition zu führen.

5. Aufnahmevorrichtung nach einem der vorstehenden Ansprüche,
**dadurch gekennzeichnet, dass**
der Rahmen (3) eine horizontale Plattform (26) aufweist,
die sich unterhalb eines Wasserfahrzeugs (2, 2.2) auf dem Rahmen (3) befindet,
wobei ein oberes Segment der oder jeder Kette (8, 8.l, 8.r) entlang einer Bahn oberhalb der horizontalen Plattform (26) und ein unteres Segment entlang einer Bahn unterhalb der horizontalen Plattform (26) geführt sind.

6. Aufnahmevorrichtung nach Anspruch 5,
**dadurch gekennzeichnet, dass**
die Aufnahmevorrichtung jeweils mindestens eine Ketten-Führungseinheit (12.o, 12.u, 12.l.o, 12.l.u, 12.r.o, 12.r.u) für die oder jede Kette (8, 8.l, 8.r) aufweist,
wobei die Ketten-Führungseinheit (12.o, 12.u, 12.l.o, 12.l.u, 12.r.o, 12.r.u) an dem Rahmen (3) montiert ist und das obere Segment und / oder das untere Segment der Kette (8, 8.l, 8.r) über die oder eine Ketten-Führungseinheit (12.o, 12.u, 12.l.o, 12.l.u, 12.r.o, 12.r.u) geführt ist.

7. Aufnahmevorrichtung nach einem der vorstehenden Ansprüche,
**dadurch gekennzeichnet, dass**
die Aufnahmevorrichtung eine Wasserfahrzeug-Führungseinrichtung (4.l, 4.r, 13.l, 13.r, 16.l, 16.r) umfasst,
welche
• an dem Rahmen (3) montiert ist und
• ein aufzunehmendes Wasserfahrzeug (2, 2.2) entlang des Rahmens (3) zu führen und/oder zu leiten vermag.

8. Aufnahmevorrichtung nach einem der vorstehenden Ansprüche,
**dadurch gekennzeichnet, dass**
der Ketten-Antrieb (9, 17.1, ..., 18, 19) dazu ausgestaltet ist, die oder mindestens eine Kette (8, 8.l, 8.r) relativ zum Rahmen (3) wahlweise in eine erste Richtung oder in eine zur ersten Richtung entgegengesetzte zweite Richtung zu bewegen,
wobei die Aufnahmevorrichtung dazu ausgestaltet ist,
• ein Wasserfahrzeug (2, 2.2) durch Bewegen des Rahmens (3) aus der Aufnahmeposition in die oder eine Parkposition und durch Bewegen der Kette (8, 8.l, 8.r) in die erste Richtung aus dem Wasser zu ziehen und
• das Wasserfahrzeug (2, 2.2) durch Bewegen des Rahmens (3) aus der oder einer Parkposition in die Aufnahmeposition und durch Bewegen der Kette (8, 8.l, 8.r) in die zweite Richtung in das Wasser zu verbringen.

9. Anordnung mit
• einem Wasserfahrzeug (2, 2.2) und
• einer Aufnahmevorrichtung nach einem der vorstehenden Ansprüche,
wobei das Wasserfahrzeug (2, 2.2) mindestens einen Vorsprung (11, 11.2) aufweist, welcher dazu ausgestaltet ist,
• in die oder eine Kette (8, 8.l, 8.r) der Aufnahmevorrichtung einzugreifen,
• von einem Mitnehmer (14.1, 14.2, ..., 14.l.1, 14.l.2, ..., 14.r.1, 14.r.2, ...) kontaktiert zu werden und
• dadurch das Wasserfahrzeug (2, 2.2) temporär mit der oder einer Kette (8, 8.l, 8.r) zu verbinden.

10. Anordnung nach Anspruch 9,
**dadurch gekennzeichnet, dass**
das Wasserfahrzeug (2, 2.2) mindestens einen weiteren Vorsprung (11.2) aufweist und die Aufnahmevorrichtung eine weitere Kette (8.r) mit einer weiteren Abfolge von Mitnehmern (14.r.1, 14.r.2, ...) aufweist,
wobei der Vorsprung (11) und der weitere Vorsprung (11.2) - gesehen in die Bewegungsrichtung (BR) des Rahmens (3) in die Parkposition - nebeneinander angeordnet sind und
wobei der weitere Vorsprung (11.2) dazu ausgestaltet ist,
• in die weitere Kette (8.r) einzugreifen,
• von einem weiteren Mitnehmer (14.r.1, 14.r.2, ...) kontaktiert zu werden und
• dadurch das Wasserfahrzeug (2.2) temporär mit der weiteren Kette (8.r) zu verbinden.

11. Schiff (1) mit einer Tragstruktur (40) und einer Aufnahmevorrichtung nach einem der Ansprüche 1 bis 8,
wobei die Tragstruktur (40) des Schiffs (1) die Tragstruktur (40) der Aufnahmevorrichtung ist.

12. Verfahren zum Aufnehmen mindestens eines Wasserfahrzeugs (2, 2.2) unter Verwendung einer Aufnahmevorrichtung mit
• einer Tragstruktur (40),
• einem von der Tragstruktur (40) gehaltenen Rahmen (3),
• mindestens einer endlosen Kette (8, 8.l, 8.r), die mechanisch mit dem Rahmen (3) verbunden ist und eine Abfolge von Mitnehmern (14.1, 14.2, ..., 14.l.1, 14.1.2, ..., 14.r.1, 14.r.2, ...) aufweist, und
• einem Ketten-Antrieb (9, 17.1, ..., 18, 19),
wobei das Verfahren die Schritte umfasst, dass
der Ketten-Antrieb (9, 17.1, ..., 18, 19) die oder jede Kette (8, 8.l, 8.r) relativ zum Rahmen (3) entlang einer geschlossenen Kurve bewegt,
das auf dem Wasser schwimmendes Wasserfahrzeug (2, 2.2) temporär mit einem Mitnehmer (14.1, 14.2, ..., 14.l.1, 14.1.2, ..., 14.r.1, 14.r.2, ...) der oder einer Kette (8, 8.l, 8.r) verbunden wird,
die Aufnahmevorrichtung das temporär verbundene Wasserfahrzeug (2, 2.2) durch Bewegen der oder einer Kette (8, 8.l, 8.r) aus dem Wasser und auf den Rahmen (3) zieht und
der Rahmen (3) das aus dem Wasser gezogene Wasserfahrzeug (2, 2.2) trägt,
**dadurch gekennzeichnet, dass**
die Aufnahmevorrichtung ein Rahmen-Stellglied (10) umfasst,
wobei der Rahmen (3) relativ zur Tragstruktur (40) zwischen
• einer Aufnahmeposition und
• mindestens einer Parkposition
linear beweglich ist,
wobei der Schritt, dass die Aufnahmevorrichtung das Wasserfahrzeug (2, 2.2) aus dem Wasser und auf den Rahmen (3) zieht, die Schritte umfasst, dass
der Rahmen (3) in die Aufnahmeposition verbracht wird,
so dass die Kette (8, 8.l, 8.r) sich wenigstens teilweise unter der Wasseroberfläche (KWL) befindet, und
wobei das Rahmen-Stellglied (10) den Rahmen (3) mitsamt der oder jeder Kette (8, 8.l, 8.r) und dem temporär mit der Kette (8, 8.l, 8.r) verbundenen Wasserfahrzeug (2, 2.2) von der Aufnahmeposition in die oder eine Parkposition zieht.

13. Verfahren nach Anspruch 12,
**dadurch gekennzeichnet, dass**
die beiden Schritte,
• dass die Aufnahmevorrichtung das Wasserfahrzeug (2, 2.2) durch Bewegen der Kette (8, 8.l, 8.r) auf den Rahmen (3) zieht und
• dass das Rahmen-Stellglied (10) den Rahmen (3) mitsamt dem Wasserfahrzeug (2, 2.2) in die Parkposition zieht,
zeitlich überlappend durchgeführt werden.

14. Verfahren nach Anspruch 12 oder Anspruch 13,
**dadurch gekennzeichnet, dass**
die Aufnahmevorrichtung eine Rampen-Führungseinrichtung (5.l, 5.r, 6.l, 6.r) umfasst,
wobei der Schritt, dass die Aufnahmevorrichtung das Wasserfahrzeug (2, 2.2) aus dem Wasser und auf den Rahmen (3) zieht, zusätzlich den Schritt umfasst, dass
die Rampen-Führungseinrichtung (5.l, 5.r, 6.l, 6.r) den Rahmen (3) bei der Bewegung
relativ zur Tragstruktur (40) von der Aufnahmeposition in die oder eine Parkposition führt.

15. Verfahren nach einem der Ansprüche 12 bis 14,
**dadurch gekennzeichnet, dass**
das Ereignis, dass das Wasserfahrzeug (2, 2.2) eine vorgegebene Position relativ zum Rahmen (3) erreicht hat,
den Schritt auslöst, dass der Kettenantrieb (9, 17.1, ..., 18, 19) die Kette (8, 8.1, 8.r) bewegt.

## Claims

1. A recovery apparatus for recovering at least one watercraft (2, 2.2),
wherein the recovery apparatus comprises
• a carrying structure (40),
• a frame (3) held by the carrying structure (40),
• at least one endless chain (8, 8.1, 8.r) with a sequence of drivers (14.1, 14.2, ..., 14.1.1, 14.1.2, ..., 14.r.1, 14.r.2, ...) and
• a chain drive (9, 17.1, ..., 18, 19),
wherein the frame (3) is configured to carry a watercraft (2, 2.2) to be recovered,
wherein the or each chain (8, 8.1, 8.r)
• is mechanically connected to the frame (3) and
• is movable relative to the frame (3) along a closed curve in each case,
wherein the chain drive (9, 17.1, ..., 18, 19) is configured to move the or each chain (8, 8.1, 8.r) relative to the frame (3), and
wherein the recovery apparatus is configured
to pull a watercraft (2, 2.2) that is floating on the water and is temporarily connected to a driver (14.1, 14.2, ..., 14.l.1, 14.1.2, ..., 14.r.1, 14.r.2, ...) of the or a chain (8, 8.1, 8.r) out of the water and onto the frame (3) by moving the chain (8, 8.1, 8.r),
**characterized in that**
the recovery apparatus comprises a frame actuator (10),
wherein the frame (3) is linearly movable relative to the carrying structure (40) between
• a recovering position and
• at least one parked position,
wherein, when the frame (3) is in the recovering position, the chain (8, 8.1, 8.r)
is located at least partially under the water surface (DWL), and
wherein the frame actuator (10) is configured
to pull the frame (3) together with the or each chain (8, 8.1, 8.r) and a watercraft (2, 2.2) temporarily connected to the chain (8, 8.1, 8.r)
from the recovering position into the or a parked position.

2. The recovery apparatus as claimed in claim 1,
**characterized in that**
the recovery apparatus comprises a first endless chain (8.1) and a further endless chain (8.r), which
• are each mechanically connected to the frame (3),
• each comprise a sequence of drivers (14.r.1, 14.r.2, ...), and
• are each movable relative to the frame (3) along a closed curve,
wherein the two closed curves are arranged parallel to one another,
wherein the first chain (8.1) and the further chain (8.r) - as seen in the direction of movement (BR) of the frame (3) into the parked position - are arranged alongside one another, and
wherein the chain drive (9, 17.1, ..., 18, 19) is configured to move the first chain (8.1) and the further chain (8.r) relative to the frame (3).

3. The recovery apparatus as claimed in one of the preceding claims,
**characterized in that**
the recovery apparatus comprises a holding apparatus (15.1, 15.r),
which is movable relative to the frame (3) between a holding position and a releasing position,
wherein the holding apparatus (15.1, 15.r) in the holding position prevents a watercraft (2, 2.2) located on the frame (3) from moving upward relative to the or a chain (8, 8.1, 8.r), and
wherein a distance between a watercraft (2, 2.2) on the frame (3) and the holding apparatus (15.1, 15.r) arises in the releasing position.

4. The recovery apparatus as claimed in one of the preceding claims,
**characterized in that**
the recovery apparatus comprises a ramp guide device (5.1, 5.r, 6.1, 6.r),
wherein the ramp guide device (5.1, 5.r, 6.1, 6.r) is configured
to guide the frame (3) in a movement relative to the carrying structure (40) from the recovering position into the parked position.

5. The recovery apparatus as claimed in one of the preceding claims,
**characterized in that**
the frame (3) comprises a horizontal platform (26),
which is located beneath a watercraft (2, 2.2) on the frame (3),
wherein an upper segment of the or each chain (8, 8.1, 8.r) is guided along a path above the horizontal platform (26) and a lower segment is guided along a path beneath the horizontal platform (26).

6. The recovery apparatus as claimed in claim 5,
**characterized in that**
the recovery apparatus comprises in each case at least one chain guide unit (12.o, 12.u, 12.l.o, 12.l.u, 12.r.o, 12.r.u) for the or each chain (8, 8.1, 8.r),
wherein the chain guide unit (12.o, 12.u, 12.l.o, 12.l.u, 12.r.o, 12.r.u) is mounted on the frame (3) and the upper segment and/or the lower segment of the chain (8, 8.1, 8.r) is guided via the or a chain guide unit (12.o, 12.u, 12.l.o, 12.l.u, 12.r.o, 12.r.u).

7. The recovery apparatus as claimed in one of the preceding claims,
**characterized in that**
the recovery apparatus comprises a watercraft guide device (4.1, 4.r, 13.1, 13.r, 16.1, 16.r),
which
• is mounted on the frame (3) and
• is capable of guiding and/or directing a watercraft (2, 2.2) to be recovered along the frame (3).

8. The recovery apparatus as claimed in one of the preceding claims,
**characterized in that**
the chain drive (9, 17.1, ..., 18, 19) is configured to move the or at least one chain (8, 8.1, 8.r) relative to the frame (3) selectively in a first direction or in a second direction opposite to the first direction,
wherein the recovery apparatus is configured
• to pull a watercraft (2, 2.2) out of the water by moving the frame (3) out of the recovering position into the or a parked position and by moving the chain (8, 8.1, 8.r) in the first direction, and
• to introduce the watercraft (2, 2.2) into the water by moving the frame (3) out of the or a parked position into the recovering position and by moving the chain (8, 8.1, 8.r) in the second direction.

9. An arrangement having
• a watercraft (2, 2.2) and
• a recovery apparatus as claimed in one of the preceding claims,
wherein the watercraft (2, 2.2) comprises at least one protrusion (11, 11.2),
which is configured
• to engage in the or a chain (8, 8.1, 8.r) of the recovery apparatus,
• to be contacted by a driver (14.1, 14.2, ..., 14.l.1, 14.l.2, ..., 14.r.1, 14.r.2, ...) and
• as a result to temporarily connect the watercraft (2, 2.2) to the or a chain (8, 8.1, 8.r).

10. The arrangement as claimed in claim 9,
**characterized in that**
the watercraft (2, 2.2) comprises at least one further protrusion (11.2) and
the recovery apparatus comprises a further chain (8.r) with a further sequence of drivers (14.r.1, 14.r.2, ...),
wherein the protrusion (11) and the further protrusion (11.2) - as seen in the direction of movement (BR) of the frame (3) into the parked position - are arranged alongside one another, and
wherein the further protrusion (11.2) is configured
• to engage in the further chain (8.r),
• to be contacted by a further driver (14.r.1, 14.r.2, ...) and
• as a result to temporarily connect the watercraft (2.2) to the further chain (8.r).

11. A ship (1) having a carrying structure (40) and a recovery apparatus as claimed in one of claims 1 to 8,
wherein the carrying structure (40) of the ship (1) is the carrying structure (40) of the recovery apparatus.

12. A method for recovering at least one watercraft (2, 2.2)
using a recovery apparatus having
• a carrying structure (40),
• a frame (3) held by the carrying structure (40),
• at least one endless chain (8, 8.1, 8.r), which is mechanically connected to the frame (3) and comprises a sequence of drivers (14.1, 14.2, ..., 14.l.1, 14.1.2, ..., 14.r.1, 14.r.2, ...), and
• a chain drive (9, 17.1, ..., 18, 19),
wherein the method comprises the steps in which
the chain drive (9, 17.1, ..., 18, 19) moves the or each chain (8, 8.1, 8.r) relative to the frame (3) along a closed curve,
the watercraft (2, 2.2) floating on the water is connected temporarily to a driver (14.1, 14.2, ..., 14.1.1, 14.1.2, ..., 14.r.1, 14.r.2, ...) of the or a chain (8, 8.1, 8.r),
the recovery apparatus pulls the temporarily connected watercraft (2, 2.2) out of the water and onto the frame (3) by moving the or a chain (8, 8.1, 8.r), and
the frame (3) carries the watercraft (2, 2.2) pulled out of the water,
**characterized in that**
the recovery apparatus comprises a frame actuator (10),
wherein the frame (3) is linearly movable relative to the carrying structure (40) between
• a recovering position and
• at least one parked position,
wherein the step in which the recovery apparatus pulls the watercraft (2, 2.2) out of the water and onto the frame (3) comprises the steps in which
the frame (3) is moved into the recovering position
such that the chain (8, 8.1, 8.r) is located at least partially under the water surface (DWL), and
wherein the frame actuator (10) pulls the frame (3) together with the or each chain (8, 8.1, 8.r) and the watercraft (2, 2.2) temporarily connected to the chain (8, 8.1, 8.r) from the recovering position into the or a parked position.

13. The method as claimed in claim 12,
**characterized in that**
the two steps
• in which the recovery apparatus pulls the watercraft (2, 2.2) onto the frame (3) by moving the chain (8, 8.1, 8.r) and
• in which the frame actuator (10) pulls the frame (3) together with the watercraft (2, 2.2) into the parked position
are carried out in a temporally overlapping manner.

14. The method as claimed in claim 12 or claim 13,
**characterized in that**
the recovery apparatus comprises a ramp guide device (5.1, 5.r, 6.1, 6.r),
wherein the step in which the recovery apparatus pulls the watercraft (2, 2.2) out of the water and onto the frame (3) additionally comprises the step in which
the ramp guide device (5.1, 5.r, 6.1, 6.r) guides the frame (3) from the recovering position into the or a parked position during the movement relative to the carrying structure (40).

15. The method as claimed in one of claims 12 to 14,
**characterized in that**
the event of the watercraft (2, 2.2) reaching a predetermined position relative to the frame (3)
triggers the step in which the chain drive (9, 17.1, ..., 18, 19) moves the chain (8, 8.1, 8.r).

## Revendications

1. Dispositif de réception servant à recevoir au moins un véhicule nautique (2, 2.2),
le dispositif de réception comportant
• une structure porteuse (40),
• un cadre (3) retenu par la structure porteuse (40),
• au moins une chaîne sans fin (8, 8.1, 8.r) dotée d'une succession d'éléments d'entraînement (14.1, 14.2, ..., 14.1.1, 14.1.2, ..., 14.r.1, 14.r.2, ...) et
• un entraînement de chaîne (9, 17.1, ..., 18, 19), le cadre (3) étant configuré pour supporter un véhicule nautique (2, 2.2) à recevoir,
la ou chaque chaîne (8, 8.1, 8.r)
• étant reliée mécaniquement au cadre (3) et
• étant déplaçable par rapport au cadre (3) le long de respectivement une courbe fermée,
l'entraînement de chaîne (9, 17.1, ..., 18, 19) étant configuré pour déplacer la ou chaque chaîne (8, 8.1, 8.r) par rapport au cadre (3), et
le dispositif de réception étant configuré pour
tirer un véhicule nautique (2, 2.2), qui flotte sur l'eau et qui est relié temporairement à un élément d'entraînement (14.1, 14.2, ..., 14.1.1, 14.1.2, ..., 14.r.1, 14.r.2, ...) de la ou d'une chaîne (8, 8.l, 8.r), hors de l'eau et sur le cadre (3) par déplacement de la chaîne (8, 8.1, 8.r),
**caractérisé en ce que**
le dispositif de réception comporte un élément de commande de cadre (10),
le cadre (3) étant mobile linéairement par rapport à la structure porteuse (40) entre
• une position de réception et
• au moins une position de stationnement,
la chaîne (8, 8.1, 8.r) se trouvant au moins partiellement sous la surface de l'eau (KWL) lorsque le cadre (3) est dans la position de réception et
l'élément de commande de cadre (10) étant configuré pour tirer le cadre (3) avec la ou chaque chaîne (8, 8.1, 8.r) et un véhicule nautique (2, 2.2) relié temporairement à la chaîne (8, 8.1, 8.r)
de la position de réception à la ou une position de stationnement.

2. Dispositif de réception selon la revendication 1, **caractérisé en ce que**
le dispositif de réception comporte une première chaîne sans fin (8.1) et une autre chaîne sans fin (8.r), qui, respectivement,
• son reliées mécaniquement au cadre (3),
• comprennent une succession d'éléments d'entraînement (14.r.1, 14.r.2, ...) et
• sont déplaçables par rapport au cadre (3) le long d'une courbe fermée,
les deux courbes fermées étant disposées parallèlement l'une à l'autre,
la première chaîne (8.1) et l'autre chaîne (8.r) étant juxtaposées vues dans le sens de déplacement (BR) du cadre (3) dans la position de stationnement et
l'entraînement de chaîne (9, 17.1, ..., 18, 19) étant configuré pour déplacer la première chaîne (8.1) et l'autre chaîne (8.r) par rapport au cadre (3).

3. Dispositif de réception selon l'une des revendications précédentes,
**caractérisé en ce que**
le dispositif de réception comporte un dispositif de retenue (15.1, 15.r),
lequel est mobile par rapport au cadre (3) entre une position de retenue et une position de libération,
le dispositif de retenue (15.1, 15.r) empêchant, dans la position de retenue, un déplacement vers le haut d'un véhicule nautique (2, 2.2) se trouvant sur le cadre (3) par rapport à la ou une chaîne (8, 8.1, 8.r) et
une distance entre un véhicule nautique (2, 2.2) sur le cadre (3) et le dispositif de retenue (15.1, 15.r) apparaissant dans la position de libération.

4. Dispositif de réception selon l'une des revendications précédentes,
**caractérisé en ce que**
le dispositif de réception comporte un dispositif de guidage de rampe (5.1, 5.r, 6.1, 6.r),
le dispositif de guidage de rampe (5.1, 5.r, 6.1, 6.r) étant configuré pour guider le cadre (3) lors d'un déplacement par rapport à la structure porteuse (40) de la position de réception à la position de stationnement.

5. Dispositif de réception selon l'une des revendications précédentes,
**caractérisé en ce que**
le cadre (3) comprend une plate-forme horizontale (26), qui se trouve en dessous d'un véhicule nautique (2, 2.2) sur le cadre (3),
un segment supérieur de la ou chaque chaîne (8, 8.1, 8.r) étant guidé le long d'un trajet au-dessus de la plate-forme horizontale (26) et un segment inférieur étant guidé le long d'un trajet en dessous de la plate-forme horizontale (26).

6. Dispositif de réception selon la revendication 5,
**caractérisé en ce que**
le dispositif de réception comprend respectivement au moins une unité de guidage de chaîne (12.o, 12.u, 12.l.o, 12.l.u, 12.r.o, 12.r.u) pour la ou chaque chaîne (8, 8.l, 8.r),
l'unité de guidage de chaîne (12.o, 12.u, 12.l.o, 12.l.u, 12.r.o, 12.r.u) étant montée sur le cadre (3) et le segment supérieur et/ou le segment inférieur de la chaîne (8, 8.1, 8.r) étant guidés par le biais d'une ou de l'unité de guidage de chaîne (12.o, 12.u, 12.l.o, 12.l.u, 12.r.o, 12.r.u).

7. Dispositif de réception selon l'une des revendications précédentes,
**caractérisé en ce que**
le dispositif de réception comporte un dispositif de guidage de véhicule nautique (4.1, 4.r, 13.1, 13.r, 16.1, 16.r),
lequel
• est monté sur le cadre (3) et
• est à même de guider et/ou de diriger un véhicule nautique (2, 2.2) à recevoir le long du cadre (3).

8. Dispositif de réception selon l'une des revendications précédentes,
**caractérisé en ce que**
l'entraînement de chaîne (9, 17.1, ..., 18, 19) est configuré pour déplacer la ou au moins une chaîne (8, 8.1, 8.r) par rapport au cadre (3) sélectivement dans un premier sens ou dans un deuxième sens opposé au premier sens,
le dispositif de réception étant configuré
• pour tirer un véhicule nautique (2, 2.2) hors de l'eau par déplacement du cadre (3) de la position de réception à la ou une position de stationnement et par déplacement de la chaîne (8, 8.1, 8.r) dans le premier sens et
• pour amener le véhicule nautique (2, 2.2) dans l'eau par déplacement du cadre (3) de la ou d'une position de stationnement à la position de réception et par déplacement de la chaîne (8, 8.1, 8.r) dans le deuxième sens.

9. Ensemble comportant
• un véhicule nautique (2, 2.2) et
• un dispositif de réception selon l'une des revendications précédentes,
le véhicule nautique (2, 2.2) comprenant au moins une saillie (11, 11.2), laquelle est configurée
• pour venir en prise dans la ou une chaîne (8, 8.1, 8.r) du dispositif de réception,
• pour être mise en contact avec un élément d'entraînement (14.1, 14.2, ..., 14.1.1, 14.1.2, ..., 14.r.1, 14.r.2, ...) et
• pour ainsi relier temporairement le véhicule nautique (2, 2.2) à la ou une chaîne (8, 8.1, 8.r).

10. Ensemble selon la revendication 9,
**caractérisé en ce que**
le véhicule nautique (2, 2.2) comprend au moins une autre saillie (11.2) et le dispositif de réception comprend une autre chaîne (8.r) dotée d'une autre succession d'éléments d'entraînement (14.r.1, 14.r.2, ...),
la saillie (11) et l'autre saillie (11.2) étant juxtaposées vues dans le sens de déplacement (BR) du cadre (3) dans la position de stationnement et
l'autre saillie (11.2) étant configurée
• pour venir en prise dans l'autre chaîne (8.r),
• pour être mise en contact avec un autre élément d'entraînement (14.r.1, 14.r.2, ...) et
• pour ainsi relier temporairement le véhicule nautique (2.2) à l'autre chaîne (8.r).

11. Bateau (1) comportant une structure porteuse (40) et un dispositif de réception selon l'une des revendications 1 à 8,
la structure porteuse (40) du bateau (1) étant la structure porteuse (40) du dispositif de réception.

12. Procédé servant à recevoir au moins un véhicule nautique (2, 2.2)
à l'aide d'un dispositif de réception comportant
• une structure porteuse (40),
• un cadre (3) retenu par la structure porteuse (40),
• au moins une chaîne sans fin (8, 8.1, 8.r) qui est reliée mécaniquement au cadre (3) et qui comprend une succession d'éléments d'entraînement (14.1, 14.2, ..., 14.1.1, 14.1.2, ..., 14.r.1, 14.r.2, ...) et
• un entraînement de chaîne (9, 17.1, ..., 18, 19), le procédé comportant l'étape suivant laquelle l'entraînement de chaîne (9, 17.1, ..., 18, 19) déplace la ou chaque chaîne (8, 8.1, 8.r) par rapport au cadre (3) le long d'une courbe fermée,
le véhicule nautique (2, 2.2) flottant sur l'eau est relié temporairement à un élément d'entraînement (14.1, 14.2, ..., 14.1.1, 14.1.2, ..., 14.r.1, 14.r.2, ...) de la ou d'une chaîne (8, 8.1, 8.r),
le dispositif de réception tire hors de l'eau et sur le cadre (3) le véhicule nautique (2, 2.2) relié temporairement par déplacement de la ou d'une chaîne (8, 8.1, 8.r) et
le cadre (3) supporte le véhicule nautique (2, 2.2) tiré hors de l'eau,
**caractérisé en ce que**
le dispositif de réception comporte un élément de commande de cadre (10),
le cadre (3) étant mobile linéairement par rapport à la structure porteuse (40) entre
• une position de réception et
• au moins une position de stationnement,
l'étape suivant laquelle le dispositif de réception tire le véhicule nautique (2, 2.2) hors de l'eau et sur le cadre (3) comportant les étapes suivant lesquelles le cadre (3) est amené à la position de réception,
de sorte que la chaîne (8, 8.1, 8.r) se trouve au moins partiellement sous la surface de l'eau (KWL) et
l'élément de commande de cadre (10) tirant le cadre (3) avec la ou chaque chaîne (8, 8.1, 8.r) et le véhicule nautique (2, 2.2) relié temporairement à la chaîne (8, 8.l, 8.r) de la position de réception à la ou une position de stationnement.

13. Procédé selon la revendication 12,
**caractérisé en ce que**
les deux étapes suivant lesquelles
• le dispositif de réception tire le véhicule nautique (2, 2.2) sur le cadre (3) par déplacement de la chaîne (8, 8.1, 8.r) et
• l'élément de commande de cadre (10) tire le cadre (3) avec le véhicule nautique (2, 2.2) dans la position de stationnement
sont effectuées avec un chevauchement temporel.

14. Procédé selon la revendication 12 ou la revendication 13,
**caractérisé en ce que**
le dispositif de réception comporte un dispositif de guidage de rampe (5.1, 5.r, 6.1, 6.r),
l'étape suivant laquelle le dispositif de réception tire le véhicule nautique (2, 2.2) hors de l'eau et sur le cadre (3) comportant en outre l'étape suivant laquelle le dispositif de guidage de rampe (5.1, 5.r, 6.1, 6.r) guide le cadre (3) lors du déplacement par rapport à la structure porteuse (40) de la position de réception à la ou une position de stationnement.

15. Procédé selon l'une des revendications 12 à 14,
**caractérisé en ce que**
l'événement selon lequel le véhicule nautique (2, 2.2) a atteint une position prédéfinie par rapport au cadre (3) déclenche l'étape suivant laquelle l'entraînement de chaîne (9, 17.1, ..., 18, 19) déplace la chaîne (8, 8.1, 8.r).
